(19) Europäisches Patentamt / European Patent Office / Office européen des brevets

(11) **EP 4 205 108 B1**

(12) **EUROPEAN PATENT SPECIFICATION**

(45) Date of publication and mention
of the grant of the patent:
**28.01.2026 Bulletin 2026/05**

(21) Application number: **20767517.4**

(22) Date of filing: **02.09.2020**

(51) International Patent Classification (IPC):
*H04M 9/08* (2006.01)     *H04R 1/32* (2006.01)
*H04R 1/40* (2006.01)     *H04R 3/00* (2006.01)
*G10L 21/0208* (2013.01)

(52) Cooperative Patent Classification (CPC):
**H04R 1/403; G10L 21/0208; H04M 9/08;**
**H04R 1/326; H04R 1/406; H04R 3/005;**
G10L 2021/02082; H04R 2499/15

(86) International application number:
**PCT/EP2020/074428**

(87) International publication number:
**WO 2022/048737 (10.03.2022 Gazette 2022/10)**

(54) **ACOUSTIC PROCESSING DEVICE FOR MULTICHANNEL NONLINEAR ACOUSTIC ECHO CANCELLATION**

AKUSTISCHE VERARBEITUNGSVORRICHTUNG FÜR NICHTLINEARE AKUSTISCHE MEHRKANALECHOUNTERDRÜCKUNG

DISPOSITIF DE TRAITEMENT ACOUSTIQUE POUR ANNULATION D'ÉCHO ACOUSTIQUE NON LINÉAIRE MULTICANAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2023 Bulletin 2023/27**

(73) Proprietor: Huawei Technologies Co., Ltd.
**Shenzhen, Guangdong 518129 (CN)**

(72) Inventors:
• **HALIMEH, Modar**
  **91058 Erlangen (DE)**
• **HAUBNER, Thomas**
  **91058 Erlangen (DE)**
• **KELLERMANN, Walter**
  **91058 Erlangen (DE)**
• **TAGHIZADEH, Mohammad**
  **80992 Munich (DE)**

(74) Representative: **Körber, Martin Hans**
**Mitscherlich PartmbB**
**Patent- und Rechtsanwälte**
**Karlstraße 7**
**80333 München (DE)**

(56) References cited:
**US-A1- 2013 230 184     US-B1- 6 246 760**

**Description**

<u>TECHNICAL FIELD</u>

The present disclosure relates to acoustic sound processing in general. More specifically, the disclosure relates to an acoustic processing device for multichannel nonlinear acoustic echo cancellation (NLAEC).

<u>BACKGROUND</u>

Acoustic Echo Cancellation (AEC) addresses the problem of suppressing undesired acoustic coupling between sound reproduction and sound acquisition in an acoustic device (see G. Enzner et al., "Acoustic Echo Control", Academic Press Library in Signal Processing, 2014). AEC is often used, for instance, for full-duplex hands-free acoustic human-machine interfaces, such as smart speaker devices with multiple loudspeakers and multiple microphones. AEC with multiple loudspeakers and multiple microphones is referred to as MIMO AEC.

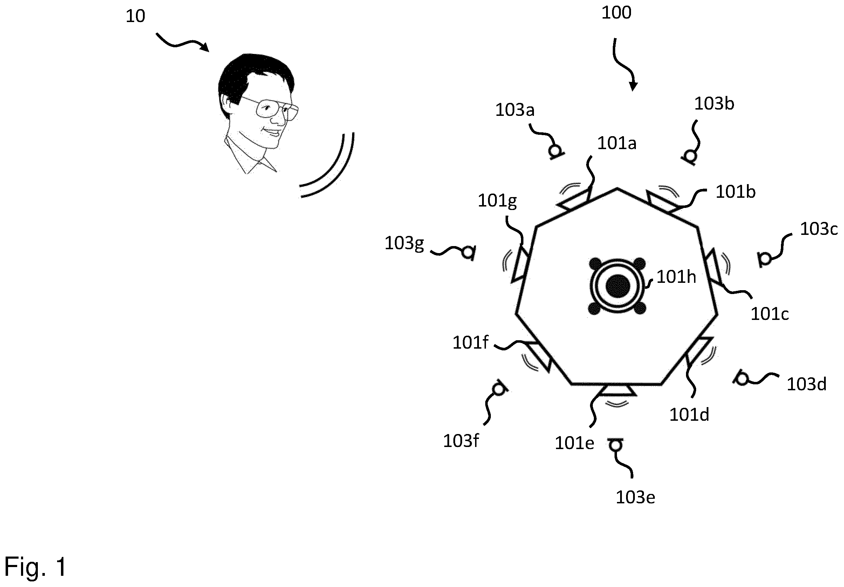

In smart speaker devices as well as other acoustic devices the so-called problem of multichannel or MIMO Nonlinear Acoustic Echo Cancellation (NLAEC) can occur. An illustration of this problem is depicted in Figure 1, where the microphones 101a-g of the smart speaker device 100 record the voice of a user 10 in addition to the signals played back by the loudspeakers 103a-h of the smart speaker device itself. With, e.g., miniaturized loudspeakers 103a-h or nonlinear power amplifiers driving the loudspeakers 103a-h, each loudspeaker 103ah may nonlinearly distort its input signal. The purpose of multichannel NLAEC is to model the nonlinear echo paths between loudspeakers and microphones in order to cancel the echo signals.

Challenges for multichannel NLAEC include the estimation of simultaneously active nonlinearities, where each loudspeaker 103a-h acts as an interferer when estimating the others. Additionally, since the estimation needs to be carried out for multiple microphones 101a-g, this would typically result in computationally demanding algorithms, rendering such systems unsuitable for miniaturized and portable devices, such as the smart speaker device 100 shown in figure 1.

US6246760B1 discloses a subband echo cancellation method for multichannel audio teleconference.

US2013230184A1 discloses an apparatus for computing filter coefficients for an adaptive filter. The apparatus has: an echo decay modeling means for modeling a decay behavior of an acoustic environment and for providing a corresponding echo decay parameter; and computing means for computing the filter coefficients of the adaptive filter on the basis of the echo decay parameter.

<u>SUMMARY</u>

It is an object of the invention to provide an improved acoustic processing device for multichannel nonlinear acoustic echo cancellation.

The foregoing and other objects are achieved by the subject matter of the independent claims. Further implementation forms are apparent from the dependent claims, the description and the figures.

According to a first aspect an acoustic processing device for multichannel nonlinear acoustic echo cancellation (NLAEC) is provided. The acoustic processing device comprises a first signal reception unit adapted to receive a plurality of loudspeaker signals and a second signal reception unit adapted to receive a plurality of microphone signals. Furthermore, the acoustic processing device comprises a processing circuitry configured to apply to each loudspeaker signal a respective pre-processing filter, in particular a memoryless pre-processing filter for filtering each loudspeaker signal in order to obtain a respective pre-processed loudspeaker signal, wherein each pre-processing filter is based on a linear combination of a plurality of pre-defined, i.e. fixed basis functions (i.e. basis filters) for approximating nonlinearity, wherein each of the pre-defined basis functions is weighted by an adjustable pre-processing weighting coefficient. The processing circuitry is further adapted to enable echo reduction by determining for each microphone signal an estimated echo signal on the basis of the plurality of pre-processed loudspeaker signals and determining a respective echo reduced microphone signal based on the respective microphone signal and the estimated echo signal. The number of the pre-defined basis filters is in the range of 2 to 5.

The acoustic processing device according to the first aspect provides a beneficial approach for canceling nonlinear distortions caused by nonlinear components in miniaturized devices, e.g., power amplifiers or loudspeakers. Unlike current state-of-the-art systems, nonlinear distortions in a MIMO setup may be canceled without impairing the quality of the near-end speaker's speech. Therefore, the acoustic processing device according to the first aspect does not degrade the performance of subsequent speech or audio processing systems, e.g., speech recognition systems, and allows for higher quality of full-duplex communication by means of, for instance, a smart speaker device comprising the acoustic processing device according to the first aspect.

The acoustic processing device according to the first aspect models the different nonlinear direct echo paths by a set of nonlinear preprocessors followed by a linear mixing system. Since the different microphone signals are estimated by the same nonlinear preprocessors, the proposed acoustic processing device is less redundant in comparison to an assignment of a set of entirely unique echo paths per microphone. Each of the preprocessors can be adapted using a selected number of microphones providing a scalable approach through the controllable trade-off between the number of microphones used to adapt each preprocessor and the computational cost associated with using more microphones. This effectively identifies the MIMO nonlinear system, which has all loudspeaker signals as inputs and all microphone signals as outputs, for instance, by means of gradients obtained for a group of coupled MISO systems, each with all loudspeaker signals as inputs and one microphone signal as output. More specifically, the adaptation of one nonlinear preprocessor using one microphone signal may be carried out with respect to a cost function that is based on an error signal minimized by a MISO system as an estimator. This error signal describes the difference between an observed microphone signal and an estimated microphone signal that is the output of a MISO system with all loudspeaker signals as inputs. The adaptation may be performed by minimizing the cost function for the MISO system with respect to the nonlinear preprocessor parameters. By minimizing the cost function for multiple MISO systems, with all loudspeaker signals as inputs, a given nonlinear preprocessor may be adapted using error signals from multiple microphone signals. The coupling between the different MISO systems is highlighted by recalling that the different MISO systems share the same loudspeakers and, thus, the same nonlinear preprocessors.

In a further possible implementation form of the first aspect, the plurality of pre-defined basis functions comprises one or more Legendre polynomials, Power filters, Fourier series, diagonal Volterra kernels or neural networks.

In a further possible implementation form of the first aspect, the processing circuitry is configured to determine the $p$-th pre-processing filter on the basis of the following equation:

$$f_p(\hat{\boldsymbol{a}}_p, x_p(n)) = \sum_{j=1}^{L_a} \hat{a}_{j,p} g_j(x_p(n)),$$

wherein $\hat{a}_{j,p}$ denotes the $j$-th adjustable pre-processing weighting coefficient of the $p$-th pre-processing filter, $g_j$ denotes the $j$-th pre-defined basis function, $x_p$ denotes the $p$-th loudspeaker signal, n denotes a sample index and $L_a$ denotes an adjustable parameter defining the number of the plurality of basis functions for modelling the respective pre-processing filter.

In a further possible implementation form of the first aspect, for each pre-processing filter the processing circuitry is configured to adjust the plurality of adjustable pre-processing weighting coefficients of the pre-processing filter on the basis of a respective selected subset of the plurality of microphone signals. In an implementation form the sizes of the selected subsets of microphone signals may differ for different pre-processing filters.

In a further possible implementation form of the first aspect, for each pre-processing filter the processing circuitry is configured to adjust the plurality of adjustable pre-processing weighting coefficients of the pre-processing filter on the basis of the respective selected subset of the plurality of microphone signals, a corresponding subset of the plurality of estimated direct echo signals and a corresponding subset of the plurality of estimated residual echo signals.

In a further possible implementation form of the first aspect, for each pre-processing filter the processing circuitry is configured to determine the selected subset of the plurality of microphone signals on the basis of a plurality of geometrical configurations, in particular spatial distances between the plurality of microphones and the respective loudspeaker associated with the respective pre-processing filter. Thus, in an implementation form for a given pre-processing filter the subset of microphone signals may be selected based on the distances of the microphones to the corresponding loudspeaker associated with the respective pre-processing filter.

In a further possible implementation form of the first aspect, for each pre-processing filter the processing circuitry is configured to adjust the plurality of adjustable pre-processing weighting coefficients of the pre-processing filter on the basis of an iterative gradient-based adjustment scheme.

In a further possible implementation form of the first aspect, for each pre-processing filter the iterative gradient-based adjustment scheme is based on a cost function depending on the respective selected subset of the plurality of microphone signals, the corresponding subset of the plurality of estimated direct echo signals and the corresponding subset of the plurality of estimated residual echo signals.

In a further possible implementation form of the first aspect, the processing circuitry is configured to determine for each microphone signal the respective echo compensated, e.g. echo free microphone signal, i.e. the target or desired signal as a difference between the respective microphone signal and the estimated echo signal.

In a further possible implementation form of the first aspect, each estimated echo signal comprises an estimated direct echo signal and an estimated residual echo signal. The processing circuitry is configured to determine for each microphone signal the respective estimated direct echo signal on the basis of the plurality of pre-processed loudspeaker signals and one or more pre-defined, i.e. fixed MIMO FIR filter templates, wherein each MIMO FIR filter template has a plurality of pre-defined filter coefficients. Moreover, the processing circuitry is configured to determine for each microphone signal the respective estimated residual echo signal on the basis of one or more selected loudspeaker signals of the plurality of loudspeaker signals and an adaptive MIMO FIR filter, wherein the adaptive MIMO FIR filter has a plurality of adaptive filter coefficients.

In a further possible implementation form of the first aspect, the processing circuitry is configured to adjust the plurality of adaptive filter coefficients of the adaptive MIMO FIR filter on the basis of the plurality of microphone signals and the plurality of estimated echo signals. In other words, in an implementation form the processing circuitry is configured to adjust, e.g. optimize the plurality of adaptive filter coefficients of the adaptive MIMO FIR filter using the microphone signals as reference signals.

In a further possible implementation form of the first aspect, the processing circuitry is configured to adjust the plurality of adaptive filter coefficients of the adaptive MIMO FIR filter on the basis of the plurality of estimated echo signals and a plurality of residual reference signals, wherein the processing circuitry is configured to determine each of the plurality of residual reference signals as a difference between the respective microphone signal and the estimated direct echo signal.

In a further possible implementation form of the first aspect, the one or more pre-defined, i.e. fixed MIMO FIR filter templates comprise a plurality of, i.e. at least two pre-defined MIMO FIR filter templates, wherein the processing circuitry is configured to determine for each microphone signal the respective estimated direct echo signal on the basis of the plurality of pre-processed loudspeaker signals and a linear combination of the plurality of pre-defined MIMO FIR filter templates, wherein each of the plurality of pre-defined MIMO FIR filter templates is weighted by an adjustable template weighting coefficient.

In a further possible implementation form of the first aspect, the processing circuitry is configured to adjust the plurality of adjustable template weighting coefficients on the basis of the plurality of microphone signals and the plurality of estimated echo signals. In other words, in an implementation form the processing circuitry is configured to adjust, e.g. optimize the plurality of adjustable weighting coefficients using the microphone signals as reference signals.

In a further possible implementation form of the first aspect, the processing circuitry is configured to adjust the plurality of adjustable template weighting coefficients on the basis of the plurality of estimated direct echo signals and a plurality of direct path reference signals, wherein the processing circuitry is configured to determine the plurality of direct path reference signals on the basis of the plurality of microphone signals, the one or more selected loudspeaker signals of the plurality of loudspeaker signals and the adaptive MIMO FIR filter.

In a further possible implementation form of the first aspect, the processing circuitry is further configured to adjust the plurality of adaptive filter coefficients of the adaptive MIMO FIR filter on the basis of the plurality of estimated echo signals and a plurality of residual reference signals, wherein the processing circuitry is configured to determine each of the plurality of residual reference signals as a difference between the respective microphone signal and the estimated direct echo signal.

According to a second aspect an acoustic device, such as a smart speaker device is disclosed. The acoustic device comprises an acoustic processing device for multichannel nonlinear acoustic echo cancellation is provided according to the first aspect. Moreover, the acoustic device comprises a plurality of loudspeakers, wherein each loudspeaker is configured to be driven by one of the plurality of loudspeaker signals. The acoustic device further comprises a plurality of microphones, wherein each microphone is configured to detect one of the plurality of microphone signals.

In a further possible implementation form of the second aspect, the acoustic device further comprises a mixing unit configured to generate the plurality of loudspeaker signals on the basis of an input signal, in particular a stereo input signal.

According to a third aspect an acoustic processing method for multichannel nonlinear acoustic echo cancellation is provided. The acoustic processing method comprises the steps of:

receiving a plurality of loudspeaker signals and a plurality of microphone signals;

applying to each loudspeaker signal a respective pre-processing filter, in particular a memoryless pre-processing filter for obtaining a respective pre-processed loudspeaker signal, wherein each pre-processing filter is based on a linear combination of a plurality of pre-defined basis functions for approximating nonlinearity, wherein each of the pre-defined basis functions is weighted by an adjustable pre-processing weighting coefficient;

determining for each microphone signal an estimated echo signal on the basis of the plurality of pre-processed loudspeaker signals; and

determining for each microphone signal a respective echo reduced microphone signal based on the respective microphone signal and the estimated echo signal.

The number of the pre-defined basis functions is in the range of 2 to 5. The acoustic processing method according to the third aspect of the present disclosure can be performed by the acoustic processing device according to the first aspect of the present disclosure. Thus, further features of the method according to the third aspect of the present disclosure result directly from the functionality of the acoustic processing device according to the first aspect of the present disclosure as well as its different implementation forms and embodiments described above and below.

According to a fourth aspect, a computer program product comprising a non-transitory computer-readable storage medium for storing program code which causes a computer or a processor to perform the acoustic processing method according to the third aspect, when the program code is executed by the computer or the processor, is provided.

Details of one or more embodiments are set forth in the accompanying drawings and the description below. Other features, objects, and advantages will be apparent from the description, drawings, and claims.

BRIEF DESCRIPTION OF THE DRAWINGS

In the following, embodiments of the present disclosure are described in more detail with reference to the attached figures and drawings, in which:

Fig. 1 is a schematic diagram illustrating a smart speaker device with a plurality of loudspeakers and a plurality of microphones;

Fig. 2a is a schematic diagram illustrating an acoustic processing device for multichannel nonlinear acoustic echo cancellation according to an embodiment;

Fig. 2b is schematic diagram illustrating further aspects of an acoustic processing device for multichannel nonlinear acoustic echo cancellation according to an embodiment;

Fig. 2c is schematic diagram illustrating further aspects of an acoustic processing device for multichannel nonlinear acoustic echo cancellation according to an embodiment;

Figs. 3a and 3b are schematic diagrams illustrating a multichannel smart speaker device according to an embodiment;

Figs. 4a and 4b are schematic diagrams illustrating a multichannel smart speaker device according to an embodiment in different processing stages;

Fig. 5 is a flow diagram illustrating an acoustic processing method for multichannel nonlinear acoustic echo cancellation according to an embodiment;

Figs. 6a and 6b are schematic diagrams illustrating a top view and a bottom view of a multichannel smart speaker device according to an embodiment including an acoustic processing device according to an embodiment;

Fig. 7 shows graphs illustrating the nonlinear AEC performance of the multichannel smart speaker device of figures 6a and 6b; and

Fig. 8 shows a table illustrating the nonlinear AEC performance of the multichannel smart speaker device of figures 6a and 6b.

In the following, identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

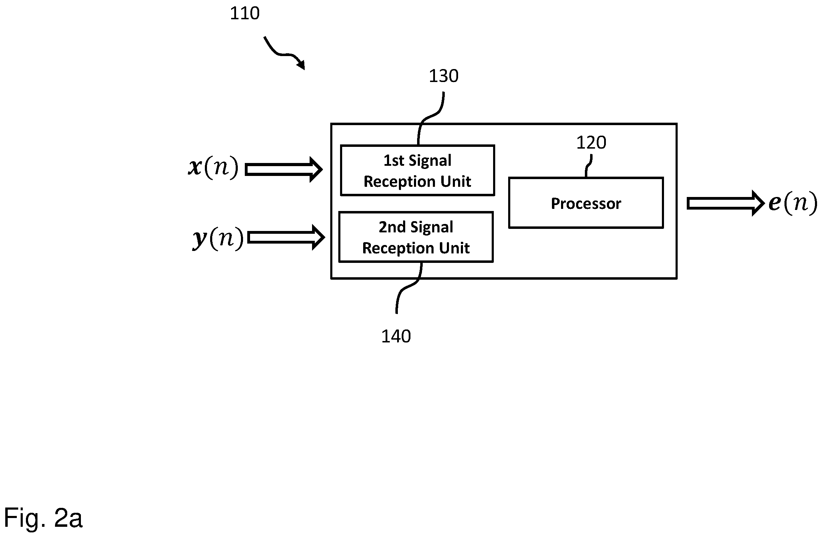

Figure 2a is a schematic diagram illustrating an acoustic processing device 110 for multichannel, i.e. MIMO nonlinear AEC according to an embodiment. As will be described in more detail below, the acoustic processing device 110 comprises a first signal reception unit 130 adapted to receive a plurality of loudspeaker signals x(n) and a second signal reception unit 140 adapted to receive a plurality of microphone signals y(n). Moreover, the acoustic processing device 110 comprises a processing circuitry 120 adapted to enable nonlinear echo reduction, in particular nonlinear acoustic echo cancellation (NLAEC). The processing circuitry 120 of the acoustic processing device 110 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The acoustic processing device 110 may further comprise a non-transitory memory configured to store data and executable program code which, when executed by the processing circuitry 120 causes the acoustic processing device 110 to perform the functions, operations and methods described herein.

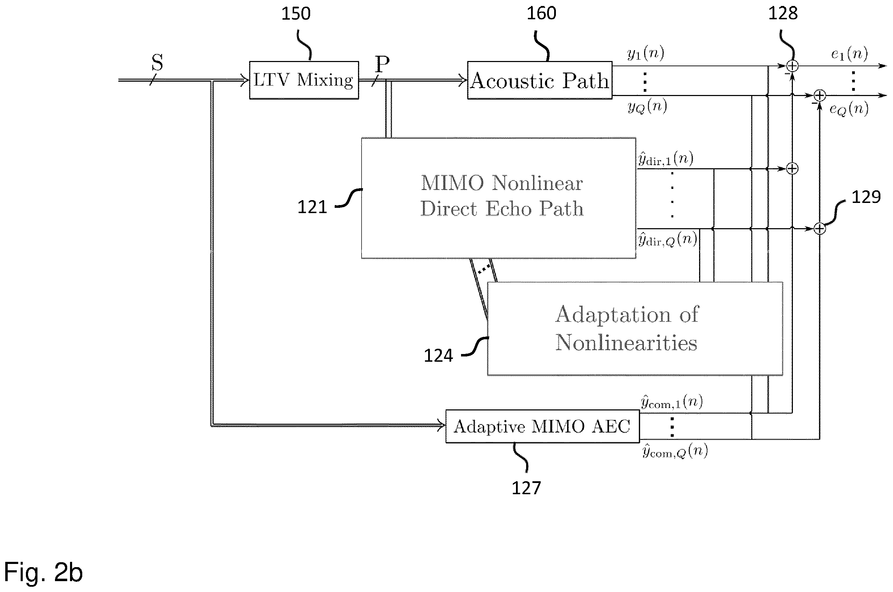

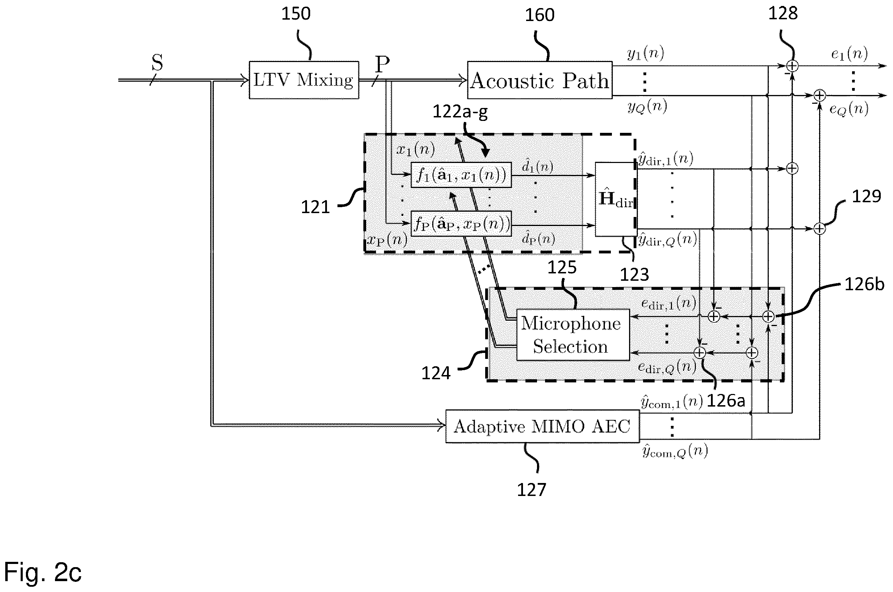

As will be described in more detail below in the context of figures 2b and 2c, the processing circuitry 120 of the acoustic processing device 110 is configured to perform nonlinear echo reduction, in particular nonlinear acoustic echo cancellation (NLAEC) by determining for each of the plurality of microphone signals $\mathbf{y}(n)$ an estimated echo signal $\hat{\mathbf{y}}(n)$ and by determining a respective echo reduced microphone signal $\mathbf{e}(n)$ based on the respective microphone signal of the plurality of microphone signals $\mathbf{y}(n)$ and the respective estimated echo signal $\hat{\mathbf{y}}(n)$. In an embodiment, the processing circuitry 120 of the acoustic processing device 110 is configured to determine for each of the plurality of microphone signals $\mathbf{y}(n)$ the respective echo reduced microphone signal $\mathbf{e}(n)$ as a difference between the respective microphone signal $\mathbf{y}(n)$ and the respective estimated echo signal $\hat{\mathbf{y}}(n)$, i.e. $\mathbf{e}(n) = \mathbf{y}(n) - \hat{\mathbf{y}}(n)$. As illustrated in figures 2b and 2c, in an embodiment, the estimated echo signal $\hat{\mathbf{y}}(n)$ comprises, i.e. is a combination of an estimated direct echo signal $\hat{\mathbf{y}}_{dir}(n)$ and an estimated residual or complementary echo signal $\hat{\mathbf{y}}_{com}(n)$. Moreover, the processing circuitry 120 may be configured to implement in hardware and/or software a processing block 128 for determining the difference between the respective microphone signal $\mathbf{y}(n)$ and the respective estimated echo signal $\hat{\mathbf{y}}(n)$, i.e. $\mathbf{e}(n) = \mathbf{y}(n) - \hat{\mathbf{y}}(n)$.

The acoustic processing device 110 may be a component of an acoustic device, such as the smart speaker device 100 shown in figure 1, further comprising the plurality of loudspeakers 101a-h, wherein each loudspeaker 101a-h is configured to be driven by one of the plurality of loudspeaker signals $\mathbf{x}(n)$, and the plurality of microphones 103a-g, wherein each microphone 103a-g is configured to detect one of the plurality of microphone signals $\mathbf{y}(n)$. In an embodiment, the acoustic device 100 may further comprise a mixing unit, such as the mixing unit 150 shown in figure 2b, configured to generate the plurality of loudspeaker signals $\mathbf{x}(n)$ on the basis of an input signal, in particular a stereo input signal $\mathbf{s}(n)$.

As will be described in more detail below and as illustrated in figure 2c, in an embodiment, the processing circuitry 120 of the acoustic processing device 110 is configured to apply to each loudspeaker signal $\mathbf{x}(n)$ a respective pre-processing filter 122a-g for filtering each loudspeaker signal $\mathbf{x}(n)$ in order to obtain a respective pre-processed loudspeaker signal $\hat{\mathbf{d}}(n)$, wherein each pre-processing filter 122a-g is based on a linear combination of a plurality of pre-defined basis functions, wherein each of the pre-defined basis functions is weighted by an adjustable pre-processing weighting coefficient.

In the following an embodiment of the acoustic processing device 110 for multichannel nonlinear AEC as a component of the acoustic device 100 according to an embodiment will be described in more detail, wherein the acoustic device 100 comprises $Q$ microphones 103a-g and $P$ loudspeakers 101a-h. As already described above, the processing circuitry 120 of the acoustic processing device 110 is configured to adjust the set of nonlinear preprocessors (or preprocessing filters) $f_1(\cdot), ..., f_P(\cdot)$ 122a-g shown in figure 2c to approximate the nonlinearities in the direct echoes recorded by the plurality of microphone signals $\mathbf{y}(n)$ via the acoustic path 160. In an embodiment, the processing circuitry 120 of the acoustic processing device 110 is configured to determine, in a first stage, the individual microphone signals $\mathbf{y}(n)$, and, in second stage, to adjust the memoryless preprocessors $f_1(\cdot), ..., f_P(\cdot)$ 122a-g.

As illustrated in figure 2c, the nonlinearly distorted output of the p-th preprocessor, i.e. preprocessing filter 122a-g may be described as

$$\hat{d}_p(n) = f_p(\hat{\mathbf{a}}_p, x_p(n)), \qquad (1)$$

wherein $x_p(n)$ is the p-th loudspeaker signal, $f_p(\cdot)$ is the nonlinear function realized by the memoryless preprocessor 122a-g, and $\hat{a}_p$ denotes a parameter vector that completely characterizes the P-th preprocessor 122a-g. In an embodiment, the processing circuitry 120 implements the nonlinear function realized by the memoryless preprocessor 122a-g as a weighted sum of $L_a$ pre-defined basis functions (or basis filters) in the following way:

$$f_p(\hat{a}_p, x_p(n)) = \sum_{j=1}^{L_a} \hat{a}_{j,p} g_j(x_p(n)), \qquad (2)$$

wherein $g_j(\cdot)$ is the $j$-th basis function, $\hat{a}_{j,p}$ denotes the adjustable pre-processing weighting coefficient of the $j$-th basis function and $L_a$ denotes an adjustable parameter defining the total number of basis functions (or basis filters) used for describing the nonlinear function realized by the memoryless preprocessor 122a-g. In an embodiment, the plurality of pre-defined basis functions may comprise, for instance, a plurality of Legendre polynomials, Power filters, Fourier series, diagonal Volterra kernels or neural networks. The plurality of pre-defined basis functions should be chosen to allow a sufficiently good approximation of any nonlinearity that might be encountered by simply adapting the weights. As will be appreciated, by using more basis functions (i.e. by increasing the value of the adjustable parameter $L_a$), the respective memoryless preprocessor 122a-g can better model any nonlinearities. However, increasing the number of basis functions too much may lead to an undesired increase of the computational costs. In an embodiment, the adjustable parameter $L_a$ defining the total number of basis functions used for approximating the nonlinearity may have a value in the range of 2 to 5, in particular 3. In an embodiment, the processing circuitry 120 may be configured to use different values of the adjustable parameter $L_a$ for different preprocessors 122a-g.

In an embodiment, the processing circuitry 120 of the acoustic processing device 110 may arrange the nonlinearly distorted signal in an $L_{\text{dir}}$-samples long frame

$$\hat{d}_p(m) = [\hat{d}_p(mL_{\text{dir}} - L_{\text{dir}} + 1), ..., \hat{d}_p(mL_{\text{dir}})]^{\text{T}}, \qquad (3)$$

with $m$ denoting the frame index. For the following description of the nonlinear filtering $\overline{d}_p(m)$ is introduced, which stacks current and previous frames of the quantity defined by Eq. (3) as follows:

$$\overline{\mathbf{d}}_p(m) = [\hat{d}_p(m-1)^{\text{T}}, \hat{d}_p(m)^{\text{T}}]^{\text{T}}. \qquad (4)$$

In an embodiment, the processing circuitry 120 of the acoustic processing device 110 is configured to obtain a frequency-domain representation of $\overline{d}_p(m)$ using the $L_{\text{block}} \times L_{\text{block}}$ Fourier transform matrix $\mathbf{F}_{L_{\text{block}}}$

$$\underline{\mathbf{d}}_p(m) = \mathbf{F}_{L_{\text{block}}} \overline{\mathbf{d}}_p(m), \qquad (5)$$

wherein a block may have a block length of $L_{\text{block}} = 2L_{\text{dir}}$. For each of the $Q \times P$ direct acoustic echo paths $\hat{h}_{\text{dir},q,p}$, the processing circuitry 120 of the acoustic processing device 110 may be configured to obtain a frequency-domain representation by

$$\hat{\underline{\mathbf{h}}}_{\text{dir},q,p} = \mathbf{F}_{L_{\text{block}}} \begin{bmatrix} \hat{\mathbf{h}}_{\text{dir},q,p} \\ \mathbf{0}_{L_{\text{dir}}} \end{bmatrix}, \qquad (6)$$

with $\mathbf{O}_{L_{dir}}$ denoting an $L_{\text{dir}}$-length zero vector. Consequently, for each microphone signal the processing circuitry 120 of the acoustic processing device 110 may be configured to determine to determine the m-th estimated microphone signal as

$$\hat{\underline{\mathbf{y}}}_{\text{dir},q}(m) = \sum_{p=1}^{P} \hat{\underline{\mathbf{h}}}_{\text{dir},q,p} \odot \underline{\mathbf{d}}_p(m), \qquad (7)$$

where $\odot$ denotes the element-wise multiplication operation. From Eq. (7), it can be seen that each estimated microphone signal $\hat{\underline{y}}_{\text{dir},q}(m)$ utilizes the outputs of all nonlinear preprocessors $\underline{d}_1(m), ..., \underline{d}_P(m)$, which, in turn, are obtained using all loudspeaker signals $x(n)$. In other words, $\hat{\underline{y}}_{\text{dir},q}(m)$ may be considered as the output of a MISO system which has all loudspeaker signals $x(n)$ as inputs.

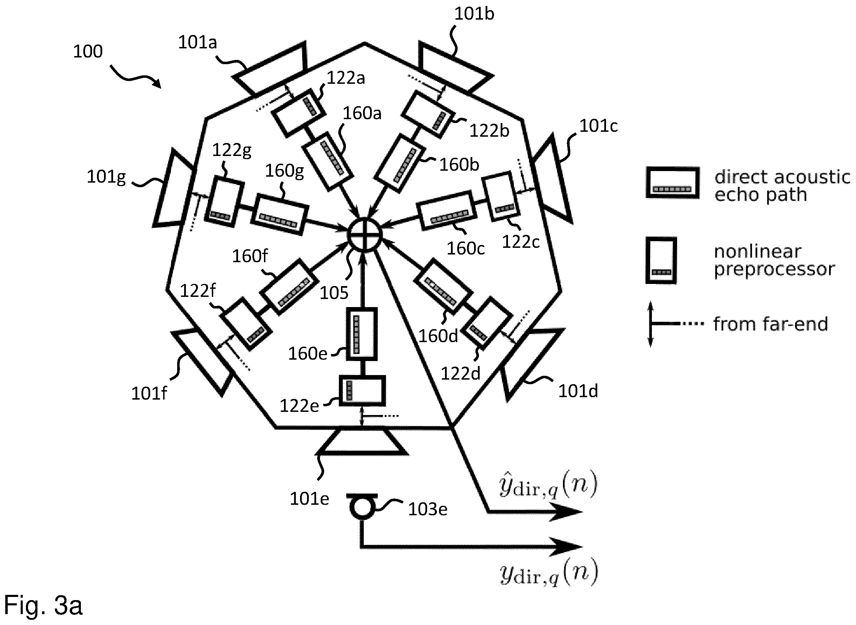

Finally, as illustrated in figure 3a, the processing circuitry 120 of the acoustic processing device 110 may be configured to determine the respective time-domain microphone signal estimate by

$$\hat{\boldsymbol{y}}_{\mathrm{dir},q}(m) = \mathbf{W}_{01}\mathbf{F}_{L_{\mathrm{block}}}^{-1}\underline{\boldsymbol{y}}_{\mathrm{dir},q}(m), \tag{8}$$

wherein $\mathbf{F}_{L_{\mathrm{block}}}^{-1}$ denotes the inverse Fourier transform matrix and $\boldsymbol{W}_{01}$ denotes an $L_{\mathrm{dir}} \times L_{\mathrm{block}}$ windowing matrix that extracts the last $L_{\mathrm{dir}}$ samples from the multiplied vector.

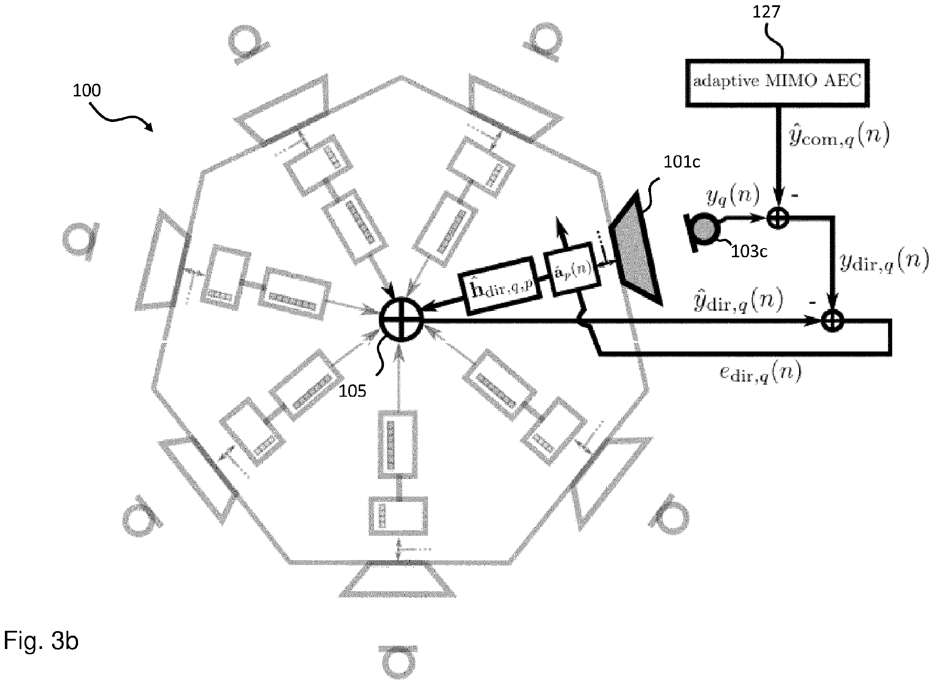

In order for the p-th preprocessor 122a-g to match the nonlinearity of the p-th loudspeaker 101a-h (and/or an amplifier thereof), the processing circuitry 120 of the acoustic processing device 110 may be configured to adjust, in particular optimize the parameter vector $\hat{\boldsymbol{a}}_p$ with respect to the direct echo path error signals for a subset $\mathcal{M}$ of the plurality of microphones 103a-h. As shown in figure 3b by way of example for the microphone 103c, for each microphone 103a-h from the subset, i.e. $q \in \mathcal{M}$ the direct echo path error signal may be defined as

$$e_{\mathrm{dir},q}(n) = y_{\mathrm{dir},q}(n) - \hat{y}_{\mathrm{dir},q}(n), \tag{9}$$

where $y_{\mathrm{dir},q}$ denotes the reference direct echo path, obtained by

$$y_{\mathrm{dir},q}(n) = y_q(n) - \hat{y}_{\mathrm{com},q}(n), \tag{10}$$

with $y_q$ denoting the $q$-th microphone signal and $\hat{y}_{\mathrm{com},q}$ denoting the $q$-th microphone's complementary echo path signal. In an embodiment, the processing circuitry 120 of the acoustic processing device 110 may be configured to implement the "Adaptive MIMO AEC" processing block 127 illustrated in figures 2b and 2c for determining the q-th microphone's complementary echo path signal.

In an embodiment, the processing circuitry 120 of the acoustic processing device 110 may be configured to implement an iterative gradient-based adjustment, in particular optimization procedure to update the parameter vector $\hat{\boldsymbol{a}}_p$ using update terms $\Delta_q\hat{\boldsymbol{a}}_p$ calculated with respect to each microphone 103a-h in the subset $q \in \mathcal{M}$,

$$\hat{\boldsymbol{a}}_p(m+1) = \hat{\boldsymbol{a}}_p(m) - \boldsymbol{\mu}_{\mathrm{NL}} \odot \sum_{q \in \mathcal{M}} \Delta_q\hat{\boldsymbol{a}}_p(m), \tag{11}$$

where $\mu_{\mathrm{NL}} = [\mu_{\mathrm{NL},1}, ..., \mu_{\mathrm{NL},L_a}]^{\mathrm{T}}$ denotes a step size vector with different step sizes per basis function. In an embodiment, for each microphone $q$ 103a-h, the update term $\Delta_q\hat{\boldsymbol{a}}_p(m)$ is derived to minimize the squared error cost function

$$\mathcal{J}(e_{\mathrm{dir},q}(m)) = \boldsymbol{e}_{\mathrm{dir},q}(m)^{\mathrm{T}}\boldsymbol{e}_{\mathrm{dir},q}(m), \tag{12}$$

where $e_{\mathrm{dir},q}(m) = [e_{\mathrm{dir},q}(mL_{\mathrm{dir}} - L_{\mathrm{dir}} + 1), ..., e_{\mathrm{dir},q}(mL_{\mathrm{dir}})]^{\mathrm{T}}$. It is important here to note that even when adapting one nonlinear preprocessor 122a-g using one microphone signal, the adaptation is based on a cost function, such as the cost function defined in Eq. (12) that relies on an error signal of a MISO system, as will be appreciated from Eq. (9) and (7). Taking the gradient of Eq. (12) yields the NLMS(Normalized Least Mean Squares)-inspired update

$$\Delta_q\hat{\boldsymbol{a}}_p(m) = \begin{bmatrix} \mathbf{I}^{\mathrm{T}}\left(\dfrac{\tilde{\Delta}_q\hat{\boldsymbol{a}}_{1,p}(m)}{\boldsymbol{b}_{1,p}^{\mathrm{T}}(m)\boldsymbol{b}_{1,p}(m)+\delta_{\mathrm{NL}}}\right) \\ \cdot \\ \cdot \\ \cdot \\ \mathbf{I}^{\mathrm{T}}\left(\dfrac{\tilde{\Delta}_q\hat{\boldsymbol{a}}_{L_a,p}(m)}{\boldsymbol{b}_{L_a,p}^{\mathrm{T}}(m)\boldsymbol{b}_{L_a,p}(m)+\delta_{\mathrm{NL}}}\right) \end{bmatrix}, \tag{13}$$

with I denoting an all-ones column vector, $\delta_{\mathrm{NL}}$ is a regularization term to avoid division by zero. $\tilde{\Delta}_q\hat{\boldsymbol{a}}_{j,p}(m)$ denotes an update term for the $j$-th basis function of the P-th preprocessor 122a-g obtained using the error signal of the $q$-th microphone 103a-h as follows

$$\tilde{\mathbf{\Delta}}_q \hat{\boldsymbol{a}}_{j,p}(m) = -\tilde{\boldsymbol{b}}_{q,j,p}(m) \odot \boldsymbol{e}_{\mathrm{dir},q}(m) \qquad (14)$$

where

$$\tilde{\boldsymbol{b}}_{q,j,p}(m) = \mathbf{W}_{01} \mathbf{F}_{L_{\mathrm{block}}}^{-1} \underline{\boldsymbol{b}}_{j,p}(m) \hat{\underline{\mathbf{h}}}_{\mathrm{dir},q,p}, \qquad (15)$$

and

$$\underline{\boldsymbol{b}}_{j,p}(m) = \mathrm{diag}(\mathbf{F}_{L_{\mathrm{block}}} \boldsymbol{b}_{j,p}(m)). \qquad (16)$$

Here, diag($\cdot$)operation extracts the diagonal elements of a matrix, while $b_{j,p}(m)$ denotes a stacked vector of the $j$-th basis function of the P-th preprocessor 122a-g

$$\boldsymbol{b}_{j,p}(m) = [\boldsymbol{c}_{j,p}^{\mathrm{T}}(m-1), \boldsymbol{c}_{j,p}^{\mathrm{T}}(m)]^{\mathrm{T}}, \qquad (17)$$

and

$$\boldsymbol{c}_{j,p}(m) = [g_j(x_p(mL_{\mathrm{dir}} - L_{\mathrm{dir}} + 1)), ..., g_j(x_p(mL_{\mathrm{dir}}))]^{\mathrm{T}}. \qquad (18)$$

As will be appreciated from Eq. (14), in order to be able to adapt one nonlinear preprocessor $f_p(\cdot)$ 122a-g using one microphone signal $y_{\mathrm{dir},q}(n)$ an error signal $e_{\mathrm{dir},q}(n)$ of a MISO system, which uses all loudspeaker signals $x_1(n), ..., x_P(n)$ as inputs and one microphone signal $y_{\mathrm{dir},q}(n)$ as output, is needed. Hence, the nonlinearities in the MIMO system are identified using gradients that are based on the error signals defined in Eq. (9) describing the difference between the observed and the approximated MISO systems in (7).

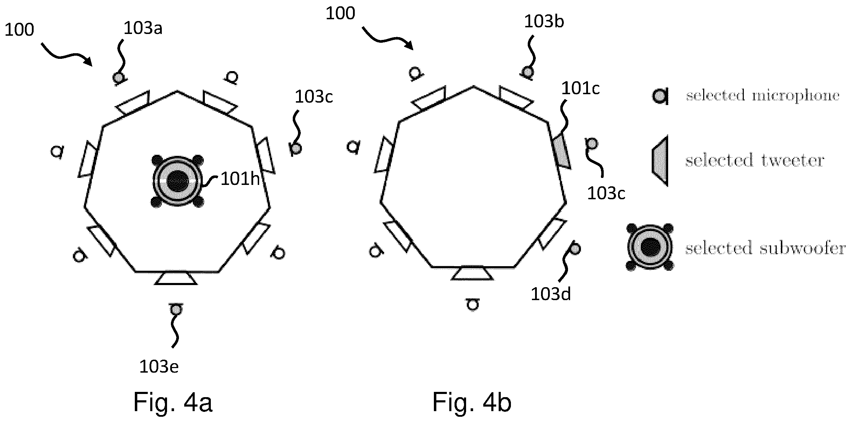

In an embodiment, the set $\mathcal{M}$ of microphones used to adapt $\hat{\boldsymbol{a}}_p$ as defined in Eq. 11 may be based on the microphones proximity to the loudspeaker modeled by the P-th preprocessor 122a-g. An exemplary selection of the microphones is shown in figures 4a and 4b, where in figure 4b the nearest three microphones (by way of example, the microphones 103b, 103c and 103d) are used by the processing circuitry 120, if the adapted preprocessor 122a-g models the tweeter loudspeaker 101c. When the adapted preprocessor 122a-g models the subwoofer loudspeaker 101h, for the example shown in figures 4a and 4b, all microphones 103a-h are equally distant from the subwoofer loudspeaker 101h, and therefore, in this case the selection is arbitrary, i.e. the processing circuitry 120 of the acoustic processing device 110 may select any subset $\mathcal{M}$ of the plurality of microphones 103a-g.

As already described above, in an embodiment, the processing circuitry 120 of the acoustic processing device 110 is configured to determine the estimated echo signal $\hat{\boldsymbol{y}}(n)$ as the sum of the estimated direct echo signal $\hat{\boldsymbol{y}}_{dir}(n)$ associated with a direct path and the estimated residual or complementary echo signal $\hat{\boldsymbol{y}}_{com}(n)$ associated with a residual or complementary path (see processing block 129 shown in figure 2c).

As will be described in more detail below, in an embodiment, the processing circuitry 120 of the acoustic processing device 110 is configured for the direct path to determine the respective estimated direct echo signal $\hat{\boldsymbol{y}}_{dir}(n)$ on the basis of the plurality of pre-processed loudspeaker signals $\hat{\boldsymbol{d}}(n)$ and one or more pre-defined MIMO FIR filter templates, wherein each MIMO FIR filter template comprises a plurality of pre-defined filter coefficients. In an embodiment, the one or more pre-defined MIMO FIR filter templates may comprise one or more room impulse responses (RIRs). In an embodiment, the processing circuitry 120 of the acoustic processing device 110 is configured to determine the respective estimated direct echo signal $\hat{\boldsymbol{y}}_{dir}(n)$ on the basis of the plurality of pre-processed loudspeaker signals $\hat{\boldsymbol{d}}(n)$ and a linear combination of the plurality of pre-defined MIMO FIR filter templates, wherein each of the plurality of pre-defined MIMO FIR filter templates is weighted by an adjustable weighting coefficient, i.e. weight.

As will described in more detail below, in an embodiment, the processing circuitry 120 is configured to determine for the residual path the respective estimated residual or complementary echo signal $\hat{\boldsymbol{y}}_{com}(n)$ on the basis of one or more selected loudspeaker signals of the plurality of loudspeaker signals and an adaptive MIMO FIR filter, wherein the adaptive MIMO FIR filter has a plurality of adaptive filter coefficients (see processing block 127 shown in figure 2c).

More specifically, as illustrated in figure 2c, the processing circuitry 120 of the acoustic processing device 110 may be configured to implement in hardware and/or software the processing block 129 for determining the estimated echo signal in the time domain

$$\hat{\boldsymbol{y}}(\boldsymbol{n}) = \hat{\boldsymbol{y}}_{dir}(\boldsymbol{n}) + \hat{\boldsymbol{y}}_{com}(\boldsymbol{n}) \in \mathbb{R}^{Q} \qquad (19)$$

as the sum of the estimated direct echo signal, i.e. the direct-path component $\hat{y}_{dir}(n)$ and the estimated residual or complementary echo signal, i.e. the residual-path component $\hat{y}_{com}(n)$. In an embodiment, the processing circuitry 120 is configured to implement in hardware and/or software a processing block 123 for computing the estimated direct echo signal, i.e. the direct-path component as

$$\hat{\boldsymbol{y}}_{dir}(\boldsymbol{n}) = \hat{\boldsymbol{H}}_{dir}^{\mathrm{T}}(\boldsymbol{n})\hat{\boldsymbol{d}}(\boldsymbol{n}) \in \mathbb{R}^{Q} \qquad (20)$$

with

$$\hat{\boldsymbol{H}}_{dir}(n) = \begin{pmatrix} \hat{\boldsymbol{h}}_{dir,11}(n) & \cdots & \hat{\boldsymbol{h}}_{dir,1Q}(n) \\ \vdots & \ddots & \vdots \\ \hat{\boldsymbol{h}}_{dir,P1}(n) & \cdots & \hat{\boldsymbol{h}}_{dir,PQ}(n) \end{pmatrix} \in \mathbb{R}^{PL \times Q} \qquad (21)$$

denoting a MIMO transmission matrix modelling $P \cdot Q$ FIR filters of length L between each of the P pre-processed loudspeaker signals (i.e. input signals) $\hat{\boldsymbol{d}}(\boldsymbol{n})$ and the Q estimated direct echo signals (i.e. output signals) captured in the vector $\hat{y}_{dir}(n)$.

As already described above, in an embodiment, the processing circuitry 120 of the acoustic processing device 110 is configured to implement the direct path AEC processing block 121 on the basis of a weighted sum of K(with $K \geq 1$) broadband MIMO FIR filter templates

$$\hat{\boldsymbol{H}}_{dir}(n) = \sum_{k=1}^{K} \hat{\boldsymbol{H}}_{k}\hat{w}_{k}(n) \qquad (22)$$

which, in an embodiment, may be extracted from a set of a priori measured room impulse responses (RIRs). The one or more MIMO FIR filter templates $\hat{H}_k$ can be considered as dictionary elements of a dictionary-based model for the direct path. As will be appreciated, because the templates $\hat{H}_k$ model the direct path, usually only the first $L_{dir} < L$ taps of the templates are non-zero. By employing the vectorization operator

$$\tilde{\boldsymbol{h}}_{dir}(n) = \mathrm{vec}\left(\hat{\boldsymbol{H}}_{dir}^{T}(n)\right) \in \mathbb{R}^{R} \qquad (23)$$

with $R = P \cdot L \cdot Q$, the MIMO direct path transmission matrix in Eq. (22) can be written as a matrix vector multiplication

$$\tilde{\boldsymbol{h}}_{dir}(n) = \tilde{\boldsymbol{H}}_{dir}\hat{\boldsymbol{w}}(n) \in \mathbb{R}^{R} \qquad (24)$$

with the time-invariant dictionary matrix

$$\tilde{\boldsymbol{H}}_{dir} = (\tilde{\boldsymbol{h}}_{dir,1} \ \ldots \ \tilde{\boldsymbol{h}}_{dir,K}) \in \mathbb{R}^{R \times K} \qquad (25)$$

and the time-varying weighting vector (defining the plurality of adjustable weighting coefficients, i.e. weights)

$$\hat{\boldsymbol{w}}(n) = \left(\hat{w}_1(n), \ldots, \hat{w}_K(n)\right)^{\mathrm{T}} \in \mathbb{R}^{K}. \qquad (26)$$

The columns of the dictionary matrix $\tilde{H}_{dir}$ contain the vectorized templates $\hat{H}_k$. Thus, the estimated direct echo signal, i.e. the direct path component may be written as

$$\hat{\boldsymbol{y}}_{dir}(n) = \hat{\boldsymbol{D}}^{T}(n)\tilde{\boldsymbol{H}}_{dir}\hat{\boldsymbol{w}}(n) = \boldsymbol{D}^{\mathrm{T}}(n)\hat{\boldsymbol{w}}(n) \in \mathbb{R}^{Q} \qquad (27)$$

with the input signal matrix

$$\widehat{D}^{T}(n) \quad = \widehat{d}^{\mathrm{T}}(n) \otimes I_Q \in \mathbb{R}^{Q \times R} \tag{28}$$

**wherein** $\otimes$ **denotes** the Kronecker product, $I_Q \in \mathbb{R}^{Q \times Q}$ denotes the identity matrix of dimension Q and $\widehat{d}(n) = (\widehat{d}_1^T(n), \dots, \widehat{d}_P^T(n))^T \in \mathbb{R}^{P \cdot L}$ and $\widehat{d}_p(n) = (\widehat{d}_p(n), \dots, \widehat{d}_p(n - L + 1))^T \in \mathbb{R}^L$.

Note that

$$D^{\mathrm{T}}(n) = \big( d_1(n) \dots d_K(n) \big) \in \mathbb{R}^{Q \times K} \tag{29}$$

describes the linear convolution of the input signals with the filter templates. In an embodiment, the processing circuitry 120 of the acoustic processing device 110 may be configured to compute these quantities by processing blocks of input signals and employing an overlap-save structure. The Discrete Fourier Transform (DFT) of the templates, i.e., dictionary elements for the overlap-save processing may be computed by the processing circuitry 120 of the acoustic processing device 110 in advance and stored in a memory of the acoustic processing device 110.

In an embodiment, the processing circuitry 120 of the acoustic processing device 110 is further configured to implement the acoustic residual, i.e. complementary path AEC processing block 127 on the basis of the following MIMO transmission matrix

$$\widehat{H}_{res}(n) = \begin{pmatrix} \widehat{h}_{res,11}(n) & \cdots & \widehat{h}_{res,1Q}(n) \\ \vdots & \ddots & \vdots \\ \widehat{h}_{res,P1}(n) & \cdots & \widehat{h}_{res,WQ}(n) \end{pmatrix} \in \mathbb{R}^{WL \times Q} \tag{30}$$

which models the system from the input signal s(n) to the reference signal $\boldsymbol{y}_{com}(n)$. As already described above, in an embodiment, the transmission matrix $\hat{H}_{res}(n)$ defines an adaptive MIMO FIR filter with a plurality of adjustable filter coefficients. As already described above, the input signal, i.e. the one or more selected loudspeaker signals s(n) may be provided by a signal selection processing block and can be configured according to the specific kind of rendering algorithm implemented by a mixing unit, such as the mixing unit 150.

As Eq. 27 denotes a linear regression model with the template outputs D(n) as covariates, i.e., input of the estimator, and the estimated direct echo signal $\hat{\boldsymbol{y}}_{dir}(n)$ as response variable, i.e., desired signal, in an embodiment the processing circuitry 120 of the acoustic processing device 110 may be configured to determine or adjust, i.e. optimize the weighting coefficients, i.e. the weights $\hat{\boldsymbol{w}}(n)$ of the linear combination of MIMO FIR filter templates on the basis of a block-recursive least squares algorithm. In such an embodiment, the processing circuitry 120 of the acoustic processing device 110 may be configured to use a block estimated direct echo signal in the following form

$$\widehat{\underline{\boldsymbol{y}}}_{dir}(m) = \Big( \widehat{\boldsymbol{y}}_{dir}^{\mathrm{T}}(mL), \dots , \widehat{\boldsymbol{y}}_{dir}^{T}(mL - L + 1) \Big)^{\mathrm{T}} \in \mathbb{R}^{QL} \tag{31}$$

which captures L samples in one block $\hat{\boldsymbol{y}}_{dir}(m)$ indexed by $m$. In an embodiment, the processing circuitry 120 of the acoustic processing device 110 may be configured to compute the block $\hat{\boldsymbol{y}}_{dir}(m)$ on the basis of an efficient overlap-save structure, as already described above. The respective linear regression problem is then to determine the weight vector in

$$\widehat{\underline{\boldsymbol{y}}}_{dir}(m) = \underline{\boldsymbol{D}}^{\mathrm{T}}(m) \widehat{w}(m) \tag{32}$$

with the linear convolution estimates of the templates

$$\underline{\boldsymbol{D}}(m) = \big( D(mL), \dots , D(mL - L + 1) \big) \in \mathbb{R}^{K \times QL}. \tag{33}$$

In an embodiment, the processing circuitry 120 of the acoustic processing device 110 is configured to iteratively estimate the weighting coefficients of the linear combination of MIMO FIR filter templates based on the error signal

$$\underline{\boldsymbol{e}}_{dir}(m) = \underline{\boldsymbol{y}}_{dir}(m) - \underline{\boldsymbol{D}}^{\mathrm{T}}(m) \widehat{w}(m) \in \mathbb{R}^{QL} \tag{34}$$

between the estimated direct echo signal Eq. (18) and the observed one, i.e.

$$\underline{\boldsymbol{y}}_{dir}(m) = \left(\boldsymbol{y}_{dir}^T(mL), \dots , \boldsymbol{y}_{dir}^{\mathrm{T}}(mL - L + 1)\right)^{\mathrm{T}} \in \mathbb{R}^{QL} \qquad (35)$$

with $\boldsymbol{y}_{dir}(mL) \in \mathbb{R}^Q$ denoting the mL-th sample of the reference signal. In an embodiment, the processing circuitry 120 of the acoustic processing device 110 is configured to determine the weighting coefficients, i.e. weights of the linear combination of MIMO FIR filter templates by minimizing a block-recursive least-squares cost function, such as the following block-recursive least-squares cost function

$$\mathcal{L}(m) = \sum_{i=0}^{m} \lambda^{m-i}\underline{\boldsymbol{e}}_{dir}^{\mathrm{T}}(i)\underline{\boldsymbol{e}}_{dir}(i). \qquad (36)$$

In an embodiment, the processing circuitry 120 of the acoustic processing device 110 is configured to determine Eq. (36) as follows

$$\widehat{\boldsymbol{w}}(m) = \boldsymbol{R}_{\underline{DD}}(m)^{-1}\boldsymbol{r}_{\underline{D}\underline{y}_{dir}}(m) \qquad (37)$$

with the sample auto-correlation matrix

$$\boldsymbol{R}_{\underline{DD}}(m) = \lambda\boldsymbol{R}_{\underline{DD}}(m - 1) + \underline{\boldsymbol{D}}(m)\underline{\boldsymbol{D}}^{\mathrm{T}}(m) \in \mathbb{R}^{K \times K} \qquad (38)$$

and the sample cross-correlation matrix

$$\boldsymbol{r}_{\underline{D}\underline{y}_{dir}}(m) = \lambda\boldsymbol{r}_{\underline{D}\underline{y}_{dir}}(m - 1) + \underline{\boldsymbol{D}}(m)\underline{\boldsymbol{y}}_{dir}(m) \in \mathbb{R}^{K}. \qquad (39)$$

To avoid numerical instability during the inversion, the processing circuitry 120 of the acoustic processing device 110 may determine the weighting coefficients of the linear combination of MIMO FIR filter templates by a Tikhonov-regularized sample auto-correlation matrix

$$\widehat{\boldsymbol{w}}(m) = \left(\boldsymbol{R}_{\underline{DD}}(m) + \delta\boldsymbol{I}_K\right)^{-1}\boldsymbol{r}_{\underline{D}\underline{y}_{dir}}(m) \qquad (40)$$

with a regularization factor $\delta$. Due to the full rank update of the sample correlation matrices, the processing circuitry 120 of the acoustic processing device 110 may refrain from using the matrix inversion lemma for directly updating the inverse. If the number of templates $K$ is low in comparison to the filter length $L$ (which may often be the case), the complexity of inverting the sample auto-correlation matrix $\boldsymbol{R}_{\underline{DD}}(m)$ is negligible in comparison to the computation of the linear convolution by overlap-save processing.

In an embodiment, the processing circuitry 120 of the acoustic processing device 110 is configured to determine the error signal of the residual, i.e. complementary path as

$$\boldsymbol{e}_{res}(\boldsymbol{n}) = \boldsymbol{y}_{com}(\boldsymbol{n}) - \widehat{\boldsymbol{H}}_{res}^{\mathrm{T}}(\boldsymbol{n})\boldsymbol{s}(\boldsymbol{n}) \in \mathbb{R}^{Q}. \qquad (41)$$

In an embodiment, the processing circuitry 120 of the acoustic processing device 110 may be configured to optimize, i.e. minimize the error signal of the residual, i.e. complementary path (for determining the plurality of adaptive filter coefficients) using one of a plurality of known optimization algorithms. For instance, in an embodiment, due to the superior convergence properties and the efficient block-processing the processing circuitry 120 of the acoustic processing device 110 may be configured to optimize, i.e. minimize the error signal of the residual path on the basis of the GFDAF optimization algorithm disclosed in H. Buchner et al., "Generalized multichannel Frequency-Domain Adaptive Filtering: efficient realization and application to hands-free speech communication", Signal Processing, 2005 and M. Schneider and W. Kellermann, "The Generalized Frequency-Domain Adaptive Filtering algorithm as an approximation of the block recursive least-squares algorithm", EURASIP Journal on Advances in Signal Processing, 2016.

As described above, in an embodiment the processing circuitry 120 of the acoustic processing device 110 may be configured to adjust, i.e. optimize for the direct path the plurality of adjustable weighting coefficients, i.e. weights of the linear combination of MIMO FIR filter templates and for the residual path the plurality of adaptive filter coefficients on the basis of one or more of the optimization algorithms described above, such as a block recursive least-squares regression algorithm or the GFDAF algorithm. In the following further embodiments of the acoustic processing device 110 will be described, where the processing circuitry 110 is further configured to determine one or more reference signals for the optimization algorithms described above.

In an embodiment, the processing circuitry 110 is configured to adjust the plurality of adjustable weighting coefficients, i.e. the weights of the weighted linear combination of the predefined MIMO FIR filter templates using the microphone signals as reference signals, i.e. on the basis of the plurality of microphone signals $\boldsymbol{y}(n)$ and the plurality of estimated echo signals $\hat{\boldsymbol{y}}(n)$. This choice for the reference signal, however, in some scenarios might lead to a biased solution of the model parameters, i.e., the weights $\hat{\boldsymbol{w}}(m)$ and the plurality of adaptive filter coefficients of $\hat{H}_{res}(m)$, as both direct and residual path aim at explaining the same data.

To address this issue, in an embodiment, the processing circuitry 120 of the acoustic processing device 110 is configured to employ as the direct-path reference signal the following signal

$$\boldsymbol{y}_{dir}(n) = \boldsymbol{y}(n) - \left(\boldsymbol{P}\hat{\boldsymbol{H}}_{res}(n)\right)^{\mathrm{T}} \boldsymbol{s}(n) \in \mathbb{R}^Q \qquad (42)$$

with the block-selection matrix

$$\boldsymbol{P} = \begin{pmatrix} \mathbf{0} & \mathbf{0} \\ \mathbf{0} & \boldsymbol{I}_{L-L_{dir}} \end{pmatrix} \otimes \boldsymbol{I}_P. \qquad (43)$$

Note that the block-selection matrix P sets the first $L_{dir}$ samples of the residual, i.e. complementary path for each loudspeaker to zero. In other words, the processing circuitry 120 may be configured to employ the error of the windowed residual path as reference for the direct-path adaptation to reduce the effect of competing adaptive filters.

For the residual, i.e. complementary path the processing circuitry 120 may be configured to use the error between the respective microphone signal y(n) and the respective estimated direct echo signal, i.e. the direct-path estimate $\hat{\boldsymbol{y}}_{dir}(n)$ as reference signal

$$\boldsymbol{y}_{com}(n) = \boldsymbol{y}(n) - \hat{\boldsymbol{y}}_{dir}(n) \in \mathbb{R}^Q. \qquad (44)$$

In this case no windowing may be necessary, as the templates may include only $L_{dir}$ non-zero samples. Using the direct-path error as reference is motivated again by the desire to model non-competing filters.

In the embodiments described above, only the sample-wise reference signals have been described. As will be appreciated, however, the corresponding block quantities are defined by summarizing L samples of the respective reference signals (as already described above).

In an embodiment, the processing circuitry 120 of the acoustic processing device 110 is configured to implement the following staged procedure for adjusting, i.e. optimizing the plurality of adjustable weighting coefficients, i.e. weights of the linear combination of MIMO FIR filter templates for the direct path and the plurality of adaptive filter coefficients for the residual path. In a first stage, the processing circuitry 120 of the acoustic processing device 110 is configured to determine the direct path reference signal defined by Eq. (42) above. As already described above, this operation may include a linear convolution, which can be efficiently implemented by an overlap-save structure in the DFT domain. In a second stage, the processing circuitry 120 of the acoustic processing device 110 is configured to update the direct path, i.e. adjust the plurality of adjustable weighting coefficients using Eq. (40) above. Thereafter, in a third stage, the processing circuitry 120 of the acoustic processing device 110 is configured to update the residual path, i.e. adjust the plurality of adaptive filter coefficients using as reference signal the error signal defined in Eq. (41) above. Thus, in an embodiment, the processing circuitry 120 is configured to first adjust, i.e. optimize the plurality of adjustable weighting coefficients of the weighted linear combination of the predefined MIMO FIR filter templates and, thereafter, adjust, i.e. optimize the plurality of adaptive filter coefficients of the adaptive MIMO FIR filter. In an embodiment, the processing circuitry 120 of the acoustic processing device 110 may be configured to perform this optimization procedure for each new block of observations.

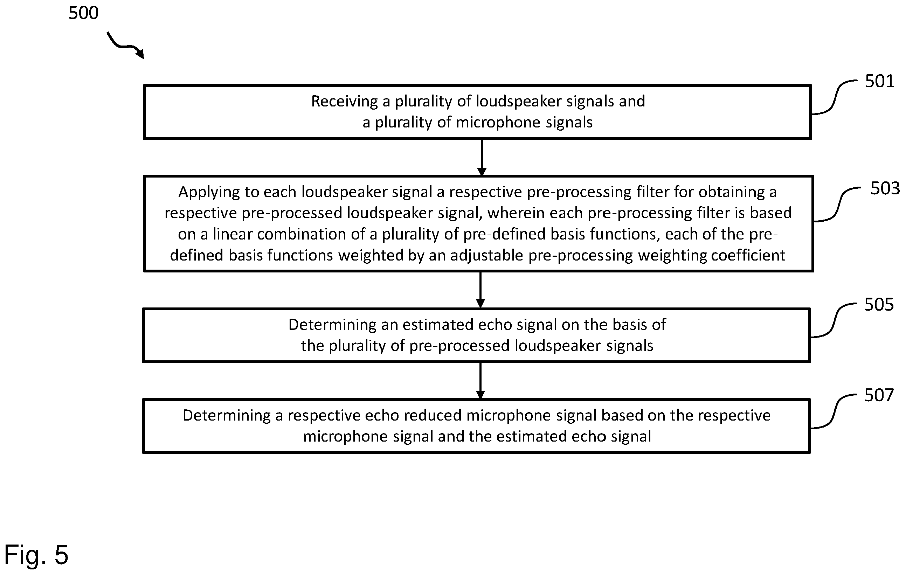

Figure 5 is a flow diagram illustrating an acoustic processing method 500 for multichannel nonlinear acoustic echo cancellation according to an embodiment. The acoustic processing method 500 comprises the steps of: receiving 501 a plurality of loudspeaker signals and a plurality of microphone signals; applying 503 to each loudspeaker signal a respective pre-processing filter 122a-g, in particular a memoryless pre-processing filter 122a-g for obtaining a respective pre-processed loudspeaker signal, wherein each pre-processing filter 122a-g is a linear combination of a plurality of pre-defined basis functions, wherein each of the pre-defined basis functions is weighted by an adjustable pre-processing weighting coefficient; determining 505 for each microphone signal an estimated echo signal on the basis of the plurality of pre-processed loudspeaker signals; and determining 507 for each microphone signal a respective echo reduced microphone signal based on the respective microphone signal and the estimated echo signal.

In an embodiment, the acoustic processing method 500 may be performed by the acoustic processing device 110 described above. Thus, further features of the acoustic processing method 500 result directly from the functionality of the different embodiments of the acoustic processing device 110 described above.

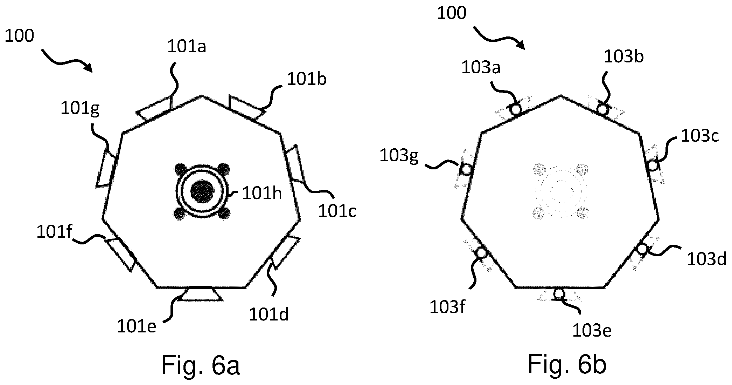

Figures 6a and 6b are schematic diagrams illustrating a top view and a bottom view of an exemplary multichannel smart speaker device 110 according to an embodiment. The exemplary smart speaker device 110 shown in figures 6a and 6b comprises eight loudspeakers 101a-h, including seven tweeters 101a-g and one subwoofer 101h, as well as seven microphones 103a-g. As can be taken from figures 6a and 6b, the seven tweeters 101a-g are mounted equidistantly from the center of the smart speaker device 110, and each of the seven microphones 103a-g is mounted below one of the tweeters 101a-g. The subwoofer 101h is mounted at the center of the device. For testing the AEC performance of the exemplary smart speaker device 110 shown in figures 6a and 6b the loudspeakers 101a-h have been chosen to exhibit only a small nonlinear distortion with an average total harmonic distortion of below 1%. In this case, the nonlinearities are strongly excited on rare occasions only when the far-end signal amplitude is extremely high. This results in a very challenging nonlinear system identification task since the nonlinearities are not consistently excited. This constitutes a test of robustness for the processing scheme implemented by the acoustic processing device 110 for ensuring that the overall performance is not degraded in the absence of nonlinearities.

For testing the AEC performance of the exemplary smart speaker device 110 shown in figures 6a and 6b three different source signals have been used, namely a female speech signal, a male speech signal, and a music signal of length☐30s each. The source signals are emitted by the different loudspeakers 101a-h in a typical living room environment with a reverberation time of $T_{60} = 550$ ms at a Sound Pressure Level (SPL) of 96 dB, measured at a 10 cm distance from the closest tweeter 101a-g. For handling the nonlinearities of the seven tweeters 101a-g seven preprocessors 122a-g are used in this example. Each of the preprocessors 122a-g uses the first three odd-order Legendre polynomials of the first kind as basis functions (i.e. in this example a value of 3 has been chosen for the adjustable parameter $L_a$ defining the number of the plurality of basis functions). The direct acoustic echo paths between the loudspeakers 101a-h and the microphones 103a-g were modeled by 60-samples-long direct acoustic echo paths measured in a low-reverberation chamber. For modelling the remaining echo paths, the "Adaptive MIMO AEC" processing block 127 of the processing circuitry 120 (shown in figures 2b and 2c) was implemented using adaptive Finite Impulse Response (FIR) filters with 1024 taps adapted by the Generalized Frequency Domain Adaptive Filtering (GFDAF) algorithm disclosed in M. Schneider and W. Kellermann "The generalized frequency-domain adaptive filtering algorithm as an approximation of the block recursive least-squares algorithm", in EURASIP Journal on Advances in Signal Processing, vol. 2016, no. 1, Jan. 2016 or T. Haubner, M. Halimeh, A. Schmidt and W. Kellermann "Robust nonlinear MIMO AEC WP 3", Technical Report, Friedrich-Alexander University Erlangen-Nurnberg, 2019.

To illustrate the benefits provided by embodiments disclosed herein the performance of the acoustic processing device 110 of the acoustic device 100 shown in figures 6a and 6b is compared with a purely linear variant of the processing architecture shown in figures 2b and 2c. Moreover, the scalability performance of embodiments disclosed herein is evaluated by varying the number of microphones 103a-g used for adapting each nonlinear preprocessor 122a-g. Finally, the Echo Return Loss Enhancement (ERLE) is used to measure the cancellation performance of embodiments disclosed herein. To measure the computational cost of each approach, the Real Time Factor (RTF) is used, as described in T. Haubner, M. Halimeh, A. Schmidt and W. Kellermann "Robust nonlinear MIMO AEC WP 3", Technical Report, Friedrich-Alexander University Erlangen-Nurnberg, 2019.

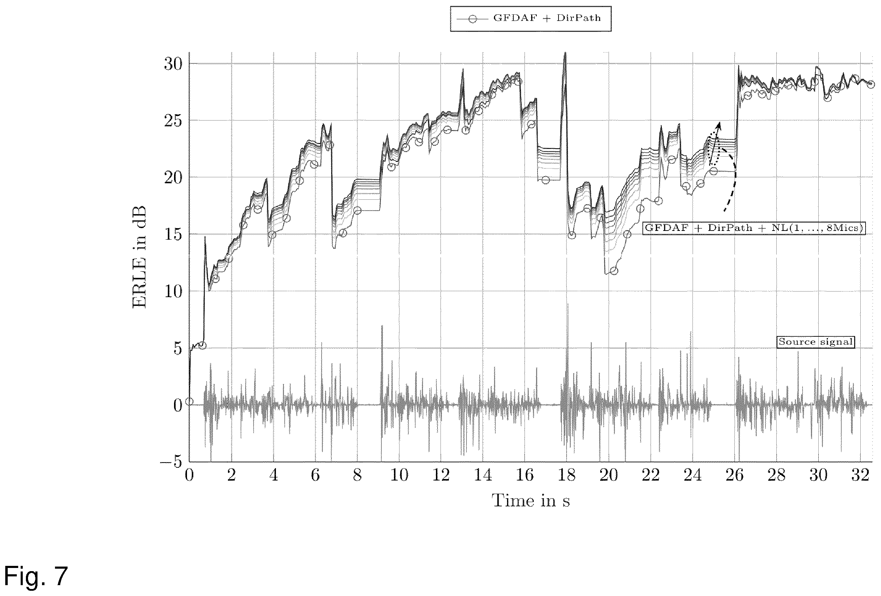

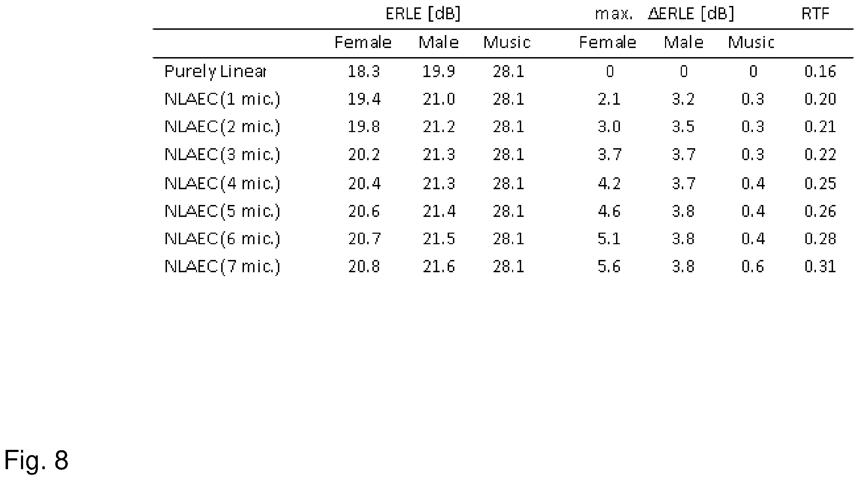

Figure 7 shows corresponding graphs illustrating the nonlinear AEC performance of the multichannel smart speaker device 110 of figures 6a and 6b. More specifically, figure 8 depicts the ERLE, averaged over microphone channels, in dB provided by the multichannel smart speaker device 110 of figures 6a and 6b with a varying number of microphones 103a-g (denoted GFDAF + DirPath + NL(# Mics)) in comparison with the purely linear variant of processing architecture illustrated in figures 2b and 2c (denoted GFDAF + DirPath) for the female speech signal as a far-end signal. As can be taken from figure 7, the modeling of the nonlinearities in the echo paths as implemented by the multichannel smart speaker device 110 of figures 6a and 6b does indeed provide a benefit when compared to a purely linear system, where a consistent gain is observed. Furthermore, the multichannel smart speaker device 110 of figures 6a and 6b is particularly beneficial at instances where the distortions are strongly excited, e.g., at $t = 20$s, where a gain of up to $\approx 6$dB is achieved. In addition, better cancellation is observed when increasing the number of microphone signals used for adapting each of the preprocessors 122a-g.

The numerical performance measures for the different far-end signals are summarized in the table shown in figure 8, namely, average ERLE, maximum ERLE difference compared to the purely linear variant, and the RTF. As can be taken from these results, while speech signals, both male and female, benefit from the modeling of the loudspeakers' nonlinearities, music does not. This may be due to its Gaussian nature, which results in a less peaky signal. Consequently, the music signal did not require very high peaky levels, as speech did, to achieve the targeted average SPL, and therefore did not excite the loudspeakers' nonlinearities. Nevertheless, even for the music signal, the multichannel nonlinear AEC implemented by the multichannel smart speaker device 110 of figures 6a and 6b did not result in any performance degradation despite the absence of the nonlinearities. In addition, it can be seen that the multichannel nonlinear AEC implemented by the multichannel smart speaker device 110 of figures 6a and 6b does indeed benefit from using more of the microphones 103a-g to estimate the nonlinearities. On the other hand, using more microphones results in a higher computational burden as seen by the increasing RTFs, highlighting the controllable trade-off between performance and computational efficiency.

Embodiments of the acoustic processing device 110 and the acoustic device 100 disclosed herein implement an efficient model which recognizes that the different nonlinearities observed by multiple microphones 103a-g may originate from the same loudspeakers 101a-h. The efficiency is achieved by limiting the number of adaptive parameters that characterize the nonlinearities by sharing the same nonlinear preprocessors 122a-g across the different microphones 103a-g. By deriving gradient-based adjustment, i.e. optimization rules in the frequency domain, embodiments disclosed herein are computationally highly efficient. Furthermore, the frequency-domain adjustment is not achieved at the expense of transforming the problem into a linear high-dimensional one as it is the case for extending Hammerstein Group Models (HGMs) to model a MIMO system.

As a result of the adjustable selection of microphone signals used for adapting the nonlinear approximation of one or more selected loudspeakers 103a-h, embodiments of the acoustic processing device 110 and the acoustic device 100 disclosed herein allow incorporating prior knowledge on the loudspeaker/microphone spatial distribution for the multiple microphones 103a-g. Moreover, by controlling the number of microphones 103a-h used in the adaptation of the nonlinear preprocessors 122a-g, embodiments of the acoustic processing device 110 and the acoustic device 100 disclosed herein implement allow an efficient adaptation to match the available computational resources.

Embodiments of the acoustic processing device 110 and the acoustic device 100 disclosed herein provide amongst others the following advantages: the capability of canceling nonlinear distortions originating from multiple simultaneously active nonlinearities originating from e.g., loudspeakers or amplifiers of loudspeakers; efficient multichannel nonlinear distortion modeling by coupling several microphones of the plurality of microphones 103a-g; exploitation of knowledge of microphone and loudspeaker positions for estimating nonlinearities in the echo path; scalable approach as the number of microphone signals used for estimating the nonlinearities is adjustable.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

**Claims**

1. An acoustic processing device (110), comprising:

   a first signal reception unit (130) adapted to receive a plurality of loudspeaker signals;
   a second signal reception unit (140) adapted to receive a plurality of microphone signals; and
   a processing circuitry (120) configured to apply to each loudspeaker signal a respective pre-processing filter (122a-g) for filtering each loudspeaker signal in order to obtain a respective pre-processed loudspeaker signal, wherein each pre-processing filter (122a-g) is based on a linear combination of a plurality of pre-defined basis filters for approximating nonlinearity, each of the pre-defined basis filters is weighted by an adjustable pre-processing weighting coefficient;
   wherein the processing circuitry (120) is adapted to enable echo reduction, the processing circuitry (120) being configured to determine an estimated echo signal on the basis of the plurality of pre-processed loudspeaker signals, wherein the processing circuitry (120) is further configured to determine a respective echo reduced microphone signal based on the respective microphone signal and the estimated echo signal,

wherein said plurality of pre-defined basis filters is in a range of 2 to 5.

2. The acoustic processing device (110) of claim 1, wherein the plurality of pre-defined basis filters comprises a plurality of Legendre polynomials, Power filters, Fourier series, diagonal Volterra kernels or neural networks.

3. The acoustic processing device (110) of claim 1 or 2, wherein the processing circuitry (120) is configured to determine the p-th pre-processing filter (122a-g) $f_p$ on the basis of the following equation:

$$f_p(\hat{\boldsymbol{a}}_p, x_p(n)) = \sum_{j=1}^{L_a} \hat{a}_{j,p} g_j(x_p(n)),$$

wherein $\hat{a}_{j,p}$ denotes the j-th adjustable pre-processing weighting coefficient of the p-th pre-processing filter (122a-g), $g_j$ denotes the j-th pre-defined basis filter, $x_p$ denotes the p-th loudspeaker signal, n denotes a sample index and $L_a$ denotes an adjustable parameter defining the number of the plurality of basis filters.

4. The acoustic processing device (110) of any one of the preceding claims, wherein for each pre-processing filter (122a-g) the processing circuitry (120) is configured to adjust the plurality of adjustable pre-processing weighting coefficients of the pre-processing filter (122a-g) on the basis of a respective selected subset of the plurality of microphone signals.

5. The acoustic processing device (110) of claim 4, wherein for each pre-processing filter (122a-g) the processing circuitry (120) is configured to adjust the plurality of adjustable pre-processing weighting coefficients of the pre-processing filter (122a-g) on the basis of the respective selected subset of the plurality of microphone signals, a corresponding subset of the plurality of estimated direct echo signals and a corresponding subset of the plurality of estimated residual echo signals.

6. The acoustic processing device (110) of claim 4 or 5, wherein for each pre-processing filter (122a-g) the processing circuitry (120) is configured to determine the selected subset of the plurality of microphone signals on the basis of a plurality of geometrical configurations between a plurality of microphones (103a-g) and a respective loudspeaker of a plurality of loudspeakers (101a-h) associated with the respective pre-processing filter (122a-g).

7. The acoustic processing device (110) of any one of claims 4 to 6, wherein for each pre-processing filter (122a-g) the processing circuitry (120) is configured to adjust the plurality of adjustable pre-processing weighting coefficients of the pre-processing filter (122a-g) on the basis of an iterative gradient-based adjustment scheme.

8. The acoustic processing device (110) of claim 7, wherein for each pre-processing filter (122a-g) the iterative gradient-based adjustment scheme is based on a cost function depending on the respective selected subset of the plurality of microphone signals, the corresponding subset of the plurality of estimated direct echo signals and the corresponding subset of the plurality of estimated residual echo signals.

9. The acoustic processing device (110) of any one of the preceding claims, wherein the processing circuitry (120) is configured to determine the respective echo compensated microphone signal as a difference between the respective microphone signal and the estimated echo signal.

10. The acoustic processing device (110) of any one of the preceding claims, wherein each estimated echo signal comprises an estimated direct echo signal and an estimated residual echo signal,

wherein the processing circuitry (120) is configured to determine the respective estimated direct echo signal on the basis of the plurality of pre-processed loudspeaker signals and one or more fixed MIMO FIR filters, each fixed MIMO FIR filter having a plurality of pre-defined filter coefficients based on templates, and
wherein the processing circuitry (120) is configured to determine the respective estimated residual echo signal on the basis of one or more selected loudspeaker signals of the plurality of loudspeaker signals and an adaptive MIMO FIR filter, the adaptive MIMO FIR filter having a plurality of adaptive filter coefficients.

11. The acoustic processing device (110) of claim 10, wherein the processing circuitry (120) is configured

(i) to adjust the plurality of adaptive filter coefficients of the adaptive MIMO FIR filter on the basis of the plurality of microphone signals and the plurality of estimated echo signals; or

(ii) to adjust the plurality of adaptive filter coefficients of the adaptive MIMO FIR filter on the basis of the plurality of estimated echo signals and a plurality of residual reference signals, wherein the processing circuitry (120) is configured to determine each of the plurality of residual reference signals as a difference between the respective microphone signal and the estimated direct echo signal; and

wherein the one or more fixed MIMO FIR filters may comprise a plurality of fixed MIMO FIR filters and wherein the processing circuitry (120) is configured to determine the respective estimated direct echo signal on the basis of the plurality of pre-processed loudspeaker signals and a linear combination of the plurality of fixed MIMO FIR filters, each of the plurality of fixed MIMO FIR filters weighted by an adjustable template weighting coefficient; and

wherein the processing circuitry (120) may be further configured to adjust the plurality of adjustable template weighting coefficients on the basis of the plurality of microphone signals and the plurality of estimated echo signals; and

wherein the processing circuitry (120) may be further configured to adjust the plurality of adjustable template weighting coefficients on the basis of the plurality of estimated direct echo signals and a plurality of direct path reference signals, wherein the processing circuitry (120) is configured to determine the plurality of direct path reference signals on the basis of the plurality of microphone signals, the one or more selected loudspeaker signals of the plurality of loudspeaker signals and the adaptive MIMO FIR filter; and

wherein the processing circuitry (120) may be further configured to adjust the plurality of adaptive filter coefficients of the adaptive MIMO FIR filter on the basis of the plurality of estimated echo signals and a plurality of residual reference signals, wherein the processing circuitry (120) is configured to determine each of the plurality of residual reference signals as a difference between the respective microphone signal and the estimated direct echo signal.

12. An acoustic device (100), comprising:

an acoustic processing device (110) according to any one of the preceding claims;
a plurality of loudspeakers (101a-h), wherein each loudspeaker (101a-h) is configured to be driven by one of the plurality of loudspeaker signals; and/or
a plurality of microphones (103a-g), wherein each microphone (103a-g) is configured to detect one of the plurality of microphone signals.

13. The acoustic device (110) of claim 12, wherein the acoustic device (110) further comprises a mixing unit (150) configured to generate the plurality of loudspeaker signals on the basis of an input signal, in particular a stereo input signal.

14. An acoustic processing method (500), comprising:

receiving (501) a plurality of loudspeaker signals and a plurality of microphone signals;
applying (503) to each loudspeaker signal a respective pre-processing filter for obtaining a respective pre-processed loudspeaker signal, wherein each pre-processing filter is based on a linear combination of a plurality of pre-defined basis filters for approximating nonlinearity, each of the pre-defined basis filters weighted by an adjustable pre-processing weighting coefficient, wherein said plurality of pre-defined basis filters is in a range of 2 to 5;
determining (505) an estimated echo signal on the basis of the plurality of pre-processed loudspeaker signals; and
determining (507) a respective echo reduced microphone signal based on the respective microphone signal and the estimated echo signal.

15. A computer program product comprising a computer-readable storage medium for storing program code which causes a computer or a processor to perform the method (500) of claim 14, when the program code is executed by the computer or the processor.

**Patentansprüche**

1. Akustische Verarbeitungsvorrichtung (110), umfassend:

eine erste Signalempfangseinheit (130), die dazu geeignet ist, eine Vielzahl von Lautsprechersignalen zu empfangen;

eine zweite Signalempfangseinheit (140), die dazu geeignet ist, eine Vielzahl von Mikrofonsignalen zu empfangen; und

eine Verarbeitungsschaltung (120), die dazu konfiguriert ist, einen jeweiligen Vorverarbeitungsfilter (122a-g) zum Filtern jedes Lautsprechersignals auf jedes Lautsprechersignal anzuwenden, um ein jeweiliges vorverarbeitetes Lautsprechersignal zu erlangen, wobei jeder Vorverarbeitungsfilter (122a-g) auf einer linearen Kombination einer Vielzahl von vordefinierten Basisfiltern zur Approximation von Nichtlinearität basiert und jeder der vordefinierten Basisfilter mit einem einstellbaren Vorverarbeitungsgewichtungskoeffizienten gewichtet ist;

wobei die Verarbeitungsschaltung (120) dazu geeignet ist, eine Echoreduzierung zu ermöglichen, wobei die Verarbeitungsschaltung (120) dazu konfiguriert ist, ein geschätztes Echosignal auf der Basis der Vielzahl von vorverarbeiteten Lautsprechersignalen zu bestimmen, wobei die Verarbeitungsschaltung (120) ferner dazu konfiguriert ist, ein jeweiliges echoreduziertes Mikrofonsignal basierend auf dem jeweiligen Mikrofonsignal und dem geschätzten Echosignal zu bestimmen,

wobei die Vielzahl von vordefinierten Basisfiltern in einem Bereich von 2 bis 5 liegt.

2. Akustische Verarbeitungsvorrichtung (110) nach Anspruch 1, wobei die Vielzahl von vordefinierten Basisfiltern eine Vielzahl von Legendre-Polynomen, Power-Filtern, Fourier-Reihen, diagonalen Volterra-Kernen oder neuronalen Netzwerken umfasst.

3. Akustische Verarbeitungsvorrichtung (110) nach Anspruch 1 oder 2, wobei die Verarbeitungsschaltung (120) dazu konfiguriert ist, den p-ten Vorverarbeitungsfilter (122a-g) $f_p$ auf der Basis der folgenden Gleichung zu bestimmen:

$$f_p(\hat{a}_p, x_p(n)) = \sum_{j=1}^{L_a} \hat{a}_{j,p} g_j(x_p(n)),$$

wobei $\hat{a}_{j,p}$ den j-ten einstellbaren Vorverarbeitungsgewichtungskoeffizienten des p-ten Vorverarbeitungsfilters (122a-g) bezeichnet, $g_j$ den j-ten vordefinierten Basisfilter bezeichnet, $x_p$ das p-te Lautsprechersignal bezeichnet, n einen Abtastindex bezeichnet und $L_\alpha$ einen einstellbaren Parameter bezeichnet, der die Anzahl der Vielzahl von Basisfiltern definiert.

4. Akustische Verarbeitungsvorrichtung (110) nach einem der vorhergehenden Ansprüche, wobei die Verarbeitungsschaltung (120) für jeden Vorverarbeitungsfilter (122a-g) dazu konfiguriert ist, die Vielzahl von einstellbaren Vorverarbeitungsgewichtungskoeffizienten des Vorverarbeitungsfilters (122a-g) auf der Basis einer jeweiligen ausgewählten Teilmenge der Vielzahl von Mikrofonsignalen einzustellen.

5. Akustische Verarbeitungsvorrichtung (110) nach Anspruch 4, wobei die Verarbeitungsschaltung (120) für jeden Vorverarbeitungsfilter (122a-g) dazu konfiguriert ist, die Vielzahl von einstellbaren Vorverarbeitungsgewichtungskoeffizienten des Vorverarbeitungsfilters (122a-g) auf der Basis der jeweiligen ausgewählten Teilmenge der Vielzahl von Mikrofonsignalen, einer entsprechenden Teilmenge der Vielzahl von geschätzten direkten Echosignalen und einer entsprechenden Teilmenge der Vielzahl von geschätzten Restechosignalen einzustellen.

6. Akustische Verarbeitungsvorrichtung (110) nach Anspruch 4 oder 5, wobei die Verarbeitungsschaltung (120) für jeden Vorverarbeitungsfilter (122a-g) dazu konfiguriert ist, die ausgewählte Teilmenge der Vielzahl von Mikrofonsignalen auf der Basis einer Vielzahl von geometrischen Konfigurationen zwischen einer Vielzahl von Mikrofonen (103a-g) und einem jeweiligen Lautsprecher einer Vielzahl von Lautsprechern (101a-h) zu bestimmen, die mit dem jeweiligen Vorverarbeitungsfilter (122ag) assoziiert sind.

7. Akustische Verarbeitungsvorrichtung (110) nach einem der Ansprüche 4 bis 6, wobei die Verarbeitungsschaltung (120) für jeden Vorverarbeitungsfilter (122a-g) dazu konfiguriert ist, die Vielzahl von einstellbaren Vorverarbeitungsgewichtungskoeffizienten des Vorverarbeitungsfilters (122a-g) auf der Basis eines iterativen gradientenbasierten Einstellungsschemas einzustellen.

8. Akustische Verarbeitungsvorrichtung (110) nach Anspruch 7, wobei das iterative gradientenbasierte Einstellungsschema für jeden Vorverarbeitungsfilter (122a-g) auf einer Kostenfunktion basiert, die von der jeweiligen ausgewählten Teilmenge der Vielzahl von Mikrofonsignalen, der entsprechenden Teilmenge der Vielzahl von geschätzten direkten Echosignalen und der entsprechenden Teilmenge der Vielzahl von geschätzten Restechosignalen abhängt.

9. Akustische Verarbeitungsvorrichtung (110) nach einem der vorhergehenden Ansprüche, wobei die Verarbeitungsschaltung (120) dazu konfiguriert ist, das jeweilige echokompensierte Mikrofonsignal als eine Differenz zwischen dem jeweiligen Mikrofonsignal und dem geschätzten Echosignal zu bestimmen.

10. Akustische Verarbeitungsvorrichtung (110) nach einem der vorhergehenden Ansprüche, wobei jedes geschätzte Echosignal ein geschätztes direktes Echosignal und ein geschätztes Restechosignal umfasst,
wobei die Verarbeitungsschaltung (120) dazu konfiguriert ist, das jeweilige geschätzte direkte Echosignal auf der Basis der Vielzahl von vorverarbeiteten Lautsprechersignalen und eines oder mehrerer fester MIMO-FIR-Filter zu bestimmen, wobei jeder feste MIMO-FIR-Filter eine Vielzahl von vordefinierten Filterkoeffizienten basierend auf von Vorlagen aufweist, und wobei die Verarbeitungsschaltung (120) dazu konfiguriert ist, das jeweilige geschätzte Restechosignal auf der Basis eines oder mehrerer ausgewählter Lautsprechersignale der Vielzahl von Lautsprechersignalen und eines adaptiven MIMO-FIR-Filters zu bestimmen, wobei der adaptive MIMO-FIR-Filter eine Vielzahl von adaptiven Filterkoeffizienten aufweist.

11. Akustische Verarbeitungsvorrichtung (110) nach Anspruch 10, wobei die Verarbeitungsschaltung (120) dazu konfiguriert ist,

(i) die Vielzahl von adaptiven Filterkoeffizienten des adaptiven MIMO-FIR-Filters auf der Basis der Vielzahl von Mikrofonsignalen und der Vielzahl von geschätzten Echosignalen einzustellen; oder

(ii) die Vielzahl von adaptiven Filterkoeffizienten des adaptiven MIMO-FIR-Filters auf der Basis der Vielzahl von geschätzten Echosignalen und einer Vielzahl von Restreferenzsignalen einzustellen, wobei die Verarbeitungsschaltung (120) dazu konfiguriert ist, jedes der Vielzahl von Restreferenzsignalen als eine Differenz zwischen dem jeweiligen Mikrofonsignal und dem geschätzten direkten Echosignal zu bestimmen; und
wobei der eine oder die mehreren festen MIMO-FIR-Filter eine Vielzahl von festen MIMO-FIR-Filtern umfassen können und wobei die Verarbeitungsschaltung (120) dazu konfiguriert ist, das jeweilige geschätzte direkte Echosignal auf der Basis der Vielzahl von vorverarbeiteten Lautsprechersignalen und einer linearen Kombination der Vielzahl von festen MIMO-FIR-Filtern zu bestimmen, wobei jeder der Vielzahl von festen MIMO-FIR-Filtern mit einem einstellbaren Vorlagengewichtungskoeffizienten gewichtet ist; und
wobei die Verarbeitungsschaltung (120) ferner dazu konfiguriert sein kann, die Vielzahl von einstellbaren Vorlagengewichtungskoeffizienten auf der Basis der Vielzahl von Mikrofonsignalen und der Vielzahl von geschätzten Echosignalen einzustellen; und
wobei die Verarbeitungsschaltung (120) ferner dazu konfiguriert sein kann, die Vielzahl von einstellbaren Vorlagengewichtungskoeffizienten auf der Basis der Vielzahl von geschätzten Direktechosignalen und einer Vielzahl von Direktpfad-Referenzsignalen einzustellen, wobei die Verarbeitungsschaltung (120) dazu konfiguriert ist, die Vielzahl von Direktpfad-Referenzsignalen auf der Basis der Vielzahl von Mikrofonsignalen, des einen oder der mehreren ausgewählten Lautsprechersignale der Vielzahl von Lautsprechersignalen und des adaptiven MIMO-FIR-Filters zu bestimmen; und
wobei die Verarbeitungsschaltung (120) ferner dazu konfiguriert sein kann, die Vielzahl von adaptiven Filterkoeffizienten des adaptiven MIMO-FIR-Filters auf der Basis der Vielzahl von geschätzten Echosignalen und einer Vielzahl von Restreferenzsignalen einzustellen, wobei die Verarbeitungsschaltung (120) dazu konfiguriert ist, jedes der Vielzahl von Restreferenzsignalen als eine Differenz zwischen dem jeweiligen Mikrofonsignal und dem geschätzten direkten Echosignal zu bestimmen.

12. Akustische Vorrichtung (100), umfassend:

eine akustische Verarbeitungsvorrichtung (110) nach einem der vorhergehenden Ansprüche;
eine Vielzahl von Lautsprechern (101a-h), wobei jeder Lautsprecher (101a-h) dazu konfiguriert ist, durch eines der Vielzahl von Lautsprechersignalen angetrieben zu werden; und/oder
eine Vielzahl von Mikrofonen (103a-g), wobei jedes Mikrofon (103a-g) dazu konfiguriert ist, eines der Vielzahl von Mikrofonsignalen zu erfassen.

13. Akustische Vorrichtung (110) nach Anspruch 12, wobei die akustische Vorrichtung (110) ferner eine Mischeinheit (150) umfasst, die dazu konfiguriert ist, die Vielzahl von Lautsprechersignalen auf der Basis eines Eingangssignals, insbesondere eines Stereo-Eingangssignals, zu generieren.

14. Akustisches Verarbeitungsverfahren (500), umfassend:

Empfangen (501) einer Vielzahl von Lautsprechersignalen und einer Vielzahl von Mikrofonsignalen;

Anwenden (503) eines jeweiligen Vorverarbeitungsfilters zum Erlangen eines jeweiligen vorverarbeiteten Lautsprechersignals auf jedes Lautsprechersignal, wobei jeder Vorverarbeitungsfilter auf einer linearen Kombination einer Vielzahl von vordefinierten Basisfiltern zur Approximation von Nichtlinearität basiert, jeder der vordefinierten Basisfilter mit einem einstellbaren Vorverarbeitungsgewichtungskoeffizienten gewichtet ist, wobei die Vielzahl der vordefinierten Basisfilter in einem Bereich von 2 bis 5 liegt;

Bestimmen (505) eines geschätzten Echosignals auf der Basis der Vielzahl von vorverarbeiteten Lautsprechersignalen; und

Bestimmen (507) eines jeweiligen echoreduzierten Mikrofonsignals basierend auf dem jeweiligen Mikrofonsignal und dem geschätzten Echosignal.

15. Computerprogrammprodukt, umfassend ein computerlesbares Speichermedium zum Speichern von Programmcode, welcher einen Computer oder einen Prozessor veranlasst, das Verfahren (500) nach Anspruch 14 durchzuführen, wenn der Programmcode durch den Computer oder den Prozessor ausgeführt wird.

**Revendications**

1. Dispositif de traitement acoustique (110), comprenant :

une première unité de réception de signal (130) conçue pour recevoir une pluralité de signaux de haut-parleur ;
une seconde unité de réception de signal (140) conçue pour recevoir une pluralité de signaux de microphone ; et
un circuit de traitement (120) configuré pour appliquer à chaque signal de haut-parleur un filtre de prétraitement respectif (122a-g) pour filtrer chaque signal de haut-parleur afin d'obtenir un signal de haut-parleur prétraité respectif, dans lequel chaque filtre de prétraitement (122a-g) est basé sur une combinaison linéaire d'une pluralité de filtres de base prédéfinis pour approximer la non-linéarité, chacun des filtres de base prédéfinis est pondéré par un coefficient de pondération de prétraitement réglable ;
dans lequel le circuit de traitement (120) est conçu pour permettre une réduction d'écho, le circuit de traitement (120) étant configuré pour déterminer un signal d'écho estimé sur la base de la pluralité de signaux de haut-parleur prétraités, dans lequel le circuit de traitement (120) est également configuré pour déterminer un signal de microphone à écho réduit respectif sur la base du signal de microphone respectif et du signal d'écho estimé, dans lequel ladite pluralité de filtres de base prédéfinis est comprise dans une plage de 2 à 5.

2. Dispositif de traitement acoustique (110) selon la revendication 1, dans lequel la pluralité de filtres de base prédéfinis comprend une pluralité de polynômes de Legendre, de filtres de puissance, de séries de Fourier, de noyaux de Volterra diagonaux ou de réseaux neuronaux.

3. Dispositif de traitement acoustique (110) selon la revendication 1 ou 2, dans lequel le circuit de traitement (120) est configuré pour déterminer le p-ième filtre de prétraitement (122a-g) $f_p$ sur la base de l'équation suivante :

$$f_p\big(\hat{\boldsymbol{a}}_p, x_p(n)\big) = \sum_{j=1}^{L_a} \hat{a}_{j,p} g_j\big(x_p(n)\big),$$

dans lequel $\hat{a}_{j,p}$ désigne le j-ième coefficient de pondération de prétraitement réglable du p-ième filtre de prétraitement (122a-g), $g_j$ désigne le j-ième filtre de base prédéfini, $x_p$ désigne le p-ième signal de haut-parleur, n désigne un indice d'échantillon et $L_a$ désigne un paramètre réglable définissant le nombre de la pluralité de filtres de base.

4. Dispositif de traitement acoustique (110) selon l'une quelconque des revendications précédentes, dans lequel, pour chaque filtre de prétraitement (122a-g), le circuit de traitement (120) est configuré pour régler la pluralité de coefficients de pondération de prétraitement réglables du filtre de prétraitement (122a-g) sur la base d'un sous-ensemble sélectionné respectif de la pluralité de signaux de microphone.

5. Dispositif de traitement acoustique (110) selon la revendication 4, dans lequel, pour chaque filtre de prétraitement (122a-g), le circuit de traitement (120) est configuré pour régler la pluralité de coefficients de pondération de prétraitement réglables du filtre de prétraitement (122a-g) sur la base du sous-ensemble sélectionné respectif de la pluralité de signaux de microphone, d'un sous-ensemble correspondant de la pluralité de signaux d'écho directs estimés et d'un sous-ensemble correspondant de la pluralité de signaux d'écho résiduels estimés.

6. Dispositif de traitement acoustique (110) selon la revendication 4 ou 5, dans lequel, pour chaque filtre de prétraitement (122a-g), le circuit de traitement (120) est configuré pour déterminer le sous-ensemble sélectionné de la pluralité de signaux de microphone sur la base d'une pluralité de configurations géométriques entre une pluralité de microphones (103a-g) et un haut-parleur respectif d'une pluralité de haut-parleurs (101a-h) associés au filtre de prétraitement respectif (122a-g).

7. Dispositif de traitement acoustique (110) selon l'une quelconque des revendications 4 à 6, dans lequel, pour chaque filtre de prétraitement (122a-g), le circuit de traitement (120) est configuré pour régler la pluralité de coefficients de pondération de prétraitement réglables du filtre de prétraitement (122a-g) sur la base d'un schéma de réglage itératif basé sur un gradient.

8. Dispositif de traitement acoustique (110) selon la revendication 7, dans lequel, pour chaque filtre de prétraitement (122a-g), le schéma de réglage itératif basé sur un gradient est basé sur une fonction de coût dépendant du sous-ensemble sélectionné respectif de la pluralité de signaux de microphone, du sous-ensemble correspondant de la pluralité de signaux d'écho directs estimés et du sous-ensemble correspondant de la pluralité de signaux d'écho résiduels estimés.

9. Dispositif de traitement acoustique (110) selon l'une quelconque des revendications précédentes, dans lequel le circuit de traitement (120) est configuré pour déterminer le signal de microphone à écho compensé respectif comme une différence entre le signal de microphone respectif et le signal d'écho estimé.

10. Dispositif de traitement acoustique (110) selon l'une quelconque des revendications précédentes, dans lequel chaque signal d'écho estimé comprend un signal d'écho direct estimé et un signal d'écho résiduel estimé,

dans lequel le circuit de traitement (120) est configuré pour déterminer le signal d'écho direct estimé respectif sur la base de la pluralité de signaux de haut-parleur prétraités et d'un ou de plusieurs filtres FIR MIMO fixes, chaque filtre FIR MIMO fixe ayant une pluralité de coefficients de filtre prédéfinis sur la base de modèles, et
dans lequel le circuit de traitement (120) est configuré pour déterminer le signal d'écho résiduel estimé respectif sur la base d'un ou de plusieurs signaux de haut-parleur sélectionnés de la pluralité de signaux de haut-parleur et d'un filtre FIR MIMO adaptatif, le filtre FIR MIMO adaptatif ayant une pluralité de coefficients de filtre adaptatif.

11. Dispositif de traitement acoustique (110) selon la revendication 10, dans lequel le circuit de traitement (120) est configuré

(i) pour régler la pluralité de coefficients de filtre adaptatif du filtre FIR MIMO adaptatif sur la base de la pluralité de signaux de microphone et de la pluralité de signaux d'écho estimés ; ou
(ii) pour régler la pluralité de coefficients de filtre adaptatif du filtre FIR MIMO adaptatif sur la base de la pluralité de signaux d'écho estimés et d'une pluralité de signaux de référence résiduels, dans lequel le circuit de traitement (120) est configuré pour déterminer chacun de la pluralité de signaux de référence résiduels comme une différence entre le signal de microphone respectif et le signal d'écho direct estimé ; et
dans lequel les un ou plusieurs filtres FIR MIMO fixes peuvent comprendre une pluralité de filtres FIR MIMO fixes et dans lequel le circuit de traitement (120) est configuré pour déterminer le signal d'écho direct estimé respectif sur la base de la pluralité de signaux de haut-parleur prétraités et d'une combinaison linéaire de la pluralité de filtres FIR MIMO fixes, chacun de la pluralité de filtres FIR MIMO fixes étant pondéré par un coefficient de pondération de modèle réglable ; et
dans lequel le circuit de traitement (120) peut également être configuré pour régler la pluralité de coefficients de pondération de modèle réglables sur la base de la pluralité de signaux de microphone et de la pluralité de signaux d'écho estimés ; et
dans lequel le circuit de traitement (120) peut également être configuré pour régler la pluralité de coefficients de pondération de modèle réglables sur la base de la pluralité de signaux d'écho directs estimés et d'une pluralité de signaux de référence de trajet direct, dans lequel le circuit de traitement (120) est configuré pour déterminer la pluralité de signaux de référence de trajet direct sur la base de la pluralité de signaux de microphone, des un ou plusieurs signaux de haut-parleur sélectionnés de la pluralité de signaux de haut-parleur et du filtre FIR MIMO adaptatif ; et
dans lequel le circuit de traitement (120) peut également être configuré pour régler la pluralité de coefficients de filtre adaptatif du filtre FIR MIMO adaptatif sur la base de la pluralité de signaux d'écho estimés et d'une pluralité de signaux de référence résiduels, dans lequel le circuit de traitement (120) est configuré pour déterminer chacun de la pluralité de signaux de référence résiduels comme une différence entre le signal de microphone respectif et le signal d'écho direct estimé.

**12.** Dispositif acoustique (100), comprenant :

un dispositif de traitement acoustique (110) selon l'une quelconque des revendications précédentes ;
une pluralité de haut-parleurs (101a-h), dans lequel chaque haut-parleur (101a-h) est configuré pour être piloté par l'un de la pluralité de signaux de haut-parleur ; et/ou
une pluralité de microphones (103a-g), dans lequel chaque microphone (103a-g) est configuré pour détecter l'un de la pluralité de signaux de microphone.

**13.** Dispositif acoustique (110) selon la revendication 12, dans lequel le dispositif acoustique (110) comprend également une unité de mixage (150) configurée pour générer la pluralité de signaux de haut-parleur sur la base d'un signal d'entrée, en particulier un signal d'entrée stéréo.

**14.** Procédé de traitement acoustique (500), comprenant :

la réception (501) d'une pluralité de signaux de haut-parleur et d'une pluralité de signaux de microphone ;
l'application (503) à chaque signal de haut-parleur d'un filtre de prétraitement respectif pour obtenir un signal de haut-parleur prétraité respectif, dans lequel chaque filtre de prétraitement est basé sur une combinaison linéaire d'une pluralité de filtres de base prédéfinis pour approximer la non-linéarité, chacun des filtres de base prédéfinis étant pondéré par un coefficient de pondération de prétraitement réglable, dans lequel ladite pluralité de filtres de base prédéfinis est comprise dans une plage de 2 à 5 ;
la détermination (505) d'un signal d'écho estimé sur la base de la pluralité de signaux de haut-parleur prétraités ; et
la détermination (507) d'un signal de microphone à écho réduit respectif sur la base du signal de microphone respectif et du signal d'écho estimé.

**15.** Produit de programme informatique comprenant un support de stockage lisible par ordinateur pour stocker un code de programme qui amène un ordinateur ou un processeur à réaliser le procédé (500) selon la revendication 14 lorsque le code de programme est exécuté par l'ordinateur ou le processeur.

Fig. 1

EP 4 205 108 B1

Fig. 2a

Fig. 2b

Fig. 2c

Fig. 3a

Fig. 3b

Fig. 4a                    Fig. 4b

500

EP 4 205 108 B1

```
┌──────────────────────────────────────────────────────────────┐
│           Receiving a plurality of loudspeaker signals and     │──── 501
│                  a plurality of microphone signals             │
└──────────────────────────────────────────────────────────────┘
                              │
                              ▼
┌──────────────────────────────────────────────────────────────┐
│  Applying to each loudspeaker signal a respective pre-processing filter for obtaining a  │──── 503
│  respective pre-processed loudspeaker signal, wherein each pre-processing filter is based │
│  on a linear combination of a plurality of pre-defined basis functions, each of the pre-  │
│  defined basis functions weighted by an adjustable pre-processing weighting coefficient   │
└──────────────────────────────────────────────────────────────┘
                              │
                              ▼
┌──────────────────────────────────────────────────────────────┐
│           Determining an estimated echo signal on the basis of │──── 505
│             the plurality of pre-processed loudspeaker signals  │
└──────────────────────────────────────────────────────────────┘
                              │
                              ▼
┌──────────────────────────────────────────────────────────────┐
│  Determining a respective echo reduced microphone signal based on the respective  │──── 507
│            microphone signal and the estimated echo signal     │
└──────────────────────────────────────────────────────────────┘
```

Fig. 5

Fig. 6a

Fig. 6b

Fig. 7

EP 4 205 108 B1

|  | ERLE [dB] | | | max. ΔERLE [dB] | | | RTF |
|---|---|---|---|---|---|---|---|
|  | Female | Male | Music | Female | Male | Music |  |
| Purely Linear | 18.3 | 19.9 | 28.1 | 0 | 0 | 0 | 0.16 |
| NLAEC(1 mic.) | 19.4 | 21.0 | 28.1 | 2.1 | 3.2 | 0.3 | 0.20 |
| NLAEC(2 mic.) | 19.8 | 21.2 | 28.1 | 3.0 | 3.5 | 0.3 | 0.21 |
| NLAEC(3 mic.) | 20.2 | 21.3 | 28.1 | 3.7 | 3.7 | 0.3 | 0.22 |
| NLAEC(4 mic.) | 20.4 | 21.3 | 28.1 | 4.2 | 3.7 | 0.4 | 0.25 |
| NLAEC(5 mic.) | 20.6 | 21.4 | 28.1 | 4.6 | 3.8 | 0.4 | 0.26 |
| NLAEC(6 mic.) | 20.7 | 21.5 | 28.1 | 5.1 | 3.8 | 0.4 | 0.28 |
| NLAEC(7 mic.) | 20.8 | 21.6 | 28.1 | 5.6 | 3.8 | 0.6 | 0.31 |

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6246760 B1

- US 2013230184 A1

**Non-patent literature cited in the description**

- **ENZNER et al.** Acoustic Echo Control. Academic Press Library in Signal Processing, 2014
- **H. BUCHNER et al.** Generalized multichannel Frequency-Domain Adaptive Filtering: efficient realization and application to hands-free speech communication. *Signal Processing*, 2005
- **M. SCHNEIDER** ; **W. KELLERMANN**. The Generalized Frequency-Domain Adaptive Filtering algorithm as an approximation of the block recursive least-squares algorithm. *EURASIP Journal on Advances in Signal Processing*, 2016

- **M. SCHNEIDER** ; **W. KELLERMANN**. The generalized frequency-domain adaptive filtering algorithm as an approximation of the block recursive least-squares algorithm. *EURASIP Journal on Advances in Signal Processing*, January 2016, vol. 2016 (1)
- Robust nonlinear MIMO AEC WP 3. **T. HAUBNER** ; **M. HALIMEH** ; **A. SCHMIDT** ; **W. KELLERMANN**. Technical Report. Friedrich-Alexander University Erlangen-Nurnberg, 2019